# EUROPEAN PATENT APPLICATION

(11) **EP 4 727 086 A1**
(43) Date of publication of application: **15.04.2026**
(21) Application number: 24842244.6
(22) Date of filing: 09.07.2024
(51) Int. Cl.: H04L 45/12

(54) **PATH SELECTION METHOD, INFORMATION PROCESSING METHOD AND APPARATUS**

(30) Priority: 20.07.2023 CN 202310901434
(71) Applicant: Huawei Technologies Co., Ltd., Shenzhen, Guangdong 518129 (CN)
(72) Inventor: TANG, Penghe, Shenzhen, Guangdong 518129 (CN); ZHUANG, Shunwan, Shenzhen, Guangdong 518129 (CN)
(74) Representative: Gill Jennings & Every LLP
(86) International application number: PCT/CN2024/104457
(87) International publication number: WO 2025/016249

(57) **Abstract**

This application discloses a routing method, including: A first user site egress device receives identification information of a target object, a first path index, and a first path performance metrics that are advertised by a first gateway, where the first path index identifies a first path for the first gateway to access the target object, and the first path performance metrics indicates performance of the first path. After receiving the identification information of the target object, the first path index, and the first path performance metrics, the first user site egress device selects, based on the first path performance metrics, a target path for accessing the target object. It can be learned that, according to the solutions, the first user site egress device may select, based on the performance of the first path for the first gateway to access the target object, the target path for accessing the target object, so that the selected target path can provide good quality of service. Good quality of service can be obtained when the target object is accessed through the target path, thereby improving access experience of accessing the target object.

## Description

This application claims priority to Chinese Patent Application No. 202310901434.8, filed with the China National Intellectual Property Administration on July 20, 2023 and entitled "ROUTING METHOD, INFORMATION PROCESSING METHOD, AND APPARATUS", which is incorporated herein by reference in its entirety.

### TECHNICAL FIELD

This application relates to the communication field, and in particular, to a routing method, an information processing method, and an apparatus.

### BACKGROUND

With wide use of enterprise information technology (information technology, IT) architectures and public clouds, increasingly more enterprises abandon a conventional closed IT architecture and shift infrastructures (such as data centers) of the enterprises to the cloud, to use an open network architecture. To further achieve this objective, key applications and software systems of the enterprises are migrated to the cloud. In this case, enterprises are increasingly dependent on software as a service (software as a service, SaaS) applications provided by application providers, and tend to access SaaS applications from the cloud through the internet, to implement access to the foregoing key applications. SaaS is a software delivery mode. In this delivery mode, software can be used only through a network without conventional installation steps. The software and data related to the software are centrally hosted on the cloud. A user usually uses a thin client, usually through a web browser, to access a software as a service. A main feature of SaaS is that the software is not downloaded to a hard disk of the user, but is stored in a cloud or a server of a provider. Compared with conventional software that needs to be purchased and downloaded, SaaS only requires the user to rent and use the software online. In this way, a purchase risk of the user is greatly reduced, and the software does not need to be downloaded and a device requirement is not limited.

A user site egress device may access, through the internet, a target object that expects to be accessed by the user site egress device, for example, a data center or an SaaS application. However, currently, when the user site egress device directly accesses, through the internet, a target object that expects to be accessed by the user site egress device, quality of service obtained by the user site egress device is not high. For example, due to heavy internet traffic, a packet loss rate, a delay, a jitter, and the like, a speed at which the user site egress device accesses an SaaS application is slow, causing poor user experience.

Therefore, a solution is urgently needed to resolve the foregoing problem.

### SUMMARY

Embodiments of this application provide a routing method, an information advertisement method, and an apparatus, to improve quality of service obtained by a user site egress device when accessing a target object, and improve access experience.

According to a first aspect, an embodiment of this application provides a routing method. The method may be applied to a first user site (site) egress device. The first user site egress device may receive identification information of a target object, a first path index (path index), and a first path performance metrics (path performance metrics) that are advertised by a first gateway, where the first path index identifies a first path for the first gateway to access the target object, and the first path performance metrics indicates performance of the first path. After receiving the identification information of the target object, the first path index, and the first path performance metrics, the first user site egress device may select, based on the first path performance metrics, the target path for accessing the target object. In an example, when the performance of the first path is better than performance of another path, a path including the first path may be selected as the target path for accessing the target object. The another path mentioned herein may be a path for directly accessing the target object through the first user site egress device, or may be another path for the first gateway to access the target object, or may be a path for another gateway, for example, a second gateway, to access the target object. It can be learned that, according to the solution in this embodiment of this application, the first user site egress device may select, based on the performance of the first path for the first gateway to access the target object, the target path for accessing the target object, so that the selected target path can provide good quality of service. Correspondingly, good quality of service can be obtained when the target object is accessed through the target path, thereby improving access experience of accessing the target object.

In a possible implementation, after receiving the identification information of the target object, the first path index, and the first path performance metrics that are advertised by the first gateway, the first user site egress device may store a correspondence between the identification information of the target object, the path index 1, and the path performance metrics 1, to subsequently select, based on the correspondence, the target path for accessing the target object.

In a possible implementation, the target object is an SaaS application. According to the solution in this embodiment of this application, a target path with good performance may be selected to access the SaaS application, to improve access experience of accessing the SaaS application, for example, improve a speed of accessing the SaaS application.

In a possible implementation, the target object is a data center. According to the solution in this embodiment of this application, access experience of accessing a data center can be improved.

In a possible implementation, the identification information of the target object is used to identify the target object, and the identification information of the target object may be a global identifier of the target object, or may be other information that can be used to identify the target object. In an example, when the target object is an SaaS application, the identification information of the target object may include an application ID, an application name, and/or an application domain name. When the target object is a data center, the identification information of the target object may be an IP address and a tenant identifier of the data center.

In a possible implementation, the first path index is a path number of the first path. For example, a path for the first gateway to access the target object may be numbered, and each path corresponds to one number. In another possible implementation, the first path index may be a multiprotocol label switching (Multiprotocol Label Switching, MPLS) label allocated by the first gateway to the first path. In another possible implementation, the first path index may be a segment routing over internet protocol version 6 segment identifier (Segment Routing over Internet Protocol Version 6 Segment Identifier, SRv6 SID) allocated by the first gateway to the first path.

In a possible implementation, when the first path index is an SRv6 SID, a node function associated with the SRv6 SID is that a node performs SRv6 decapsulation, and sends a packet to the target object based on an outbound interface corresponding to the SRv6 SID. When the target object is an SaaS application, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that the node performs SRv6 decapsulation, and sends the packet to the target SaaS application based on the outbound interface corresponding to the SRv6 SID.

In a possible implementation, the first gateway may advertise the identification information of the target object, the first path index, and the first path performance metrics to the first user site egress device through a first route. In other words, in an example, when receiving the identification information of the target object, the first path index, and the first path performance metrics that are advertised by the first gateway, the first site egress device may receive the first route advertised by the first gateway, where the first route includes the identification information of the target object, the first path index, and the first path performance metrics. In this way, the first user site egress device may obtain the first path performance metrics based on the first route, and further select, based on the first path performance metrics, a target path for accessing the target object, to improve access experience of accessing the target object.

In a possible implementation, the first route may include indication information, the indication information indicates a type of the first path index carried in the first route, and the type of the first path index may be a path number, an MPLS label, or an SRv6 SID. For example, the first route includes a path index type field, and the path index type field carries indication information indicating a type of the first path index. In this case, the first user site egress device may determine the type of the first path index based on the indication information.

In a possible implementation, a route type field of the first route indicates that the first route is a path performance route associated with the target object. The first user site egress device may determine, based on the route type field, that the first route is used to advertise performance of a path for accessing the target object. When the target object is an SaaS application, the path performance route may be an SaaS path performance route; or when the target object is a data center, the path performance route may be a data center path performance route.

In a possible implementation, the first route may be a route advertised based on a software-defined wide area network (software-defined wide area network, SD-WAN) address family or an SD-WAN subsequent address family. For example, if the first gateway and the first user site egress device enable the SD-WAN address family, the first route may be a route advertised based on the SD-WAN address family. For another example, if the first gateway and the first user site egress device enable the SD-WAN subsequent address family, the first route may be a route advertised based on the SD-WAN subsequent address family. In a specific example, if the target object is an SaaS application, the first route is a route advertised based on an SD-WAN address family or an SD-WAN subsequent address family.

In a possible implementation, the first route may be a virtual private network (virtual private network, VPN) route. In a specific example, if the target object is a data center, the first route is a VPN route.

In a possible implementation, the first user site device may further receive a site identifier of a site to which the first gateway belongs, an application type, and a node identifier (node ID) of the first gateway that are advertised by the first gateway, so that the first user site egress device can obtain richer information. The site identifier of the site to which the first gateway belongs may be an identifier of a gateway site to which the first gateway belongs. The application type may indicate a quality of service requirement of at least one type of traffic supported by the target object. The quality of service requirement of the traffic may include: optimal, allowed, and default. Optimal indicates that an optimal path needs to be used, allowed indicates that the quality of service requirement is lower than the optimal, and default indicates that there is no special requirement for quality of service.

In a possible implementation, the first path performance metrics may include at least one metrics indicating performance of the first path. Delay, packet loss rate, jitter, bandwidth, path status, and quality of experience (quality of experience, QoE) can all reflect the performance of the path 1. Therefore, in an example, the first path performance metrics may include one or more of delay, packet loss rate, jitter, bandwidth, path status, and QoE. In an example, the path status may be, for example, determined based on performance parameters such as delay, packet loss rate, jitter, and bandwidth. In another example, the QoE may be, for example, determined based on performance parameters such as delay, packet loss rate, jitter, and bandwidth. The QoE may be a specific value. A larger value corresponding to the QoE indicates better performance of the path.

In a possible implementation, if the first gateway may advertise the identification information of the target object, the first path index, and the first path performance metrics to the first user site egress device through the first route, the first route may include at least one of a first sub-type length value (sub-type length value, Sub-TLV) indicating a transmission delay of the first path, a second sub-TLV indicating a packet loss rate of the first path, a third sub-TLV indicating a jitter of the first path, a fourth sub-TLV indicating a bandwidth of the first path, a fifth sub-TLV indicating a path status of the first path, a sixth sub-TLV indicating QoE of the first path, a seventh sub-TLV indicating a name of the target object, and an eighth sub-TLV indicating a domain name of the target object.

In a possible implementation, the at least one sub-TLV may be carried in a border gateway protocol (Border Gateway Protocol, BGP) path attribute of the first route. For example, the at least one sub-TLV is carried in a metadata path attribute (Metadata Path Attribute) or a tunnel encapsulation attribute (Tunnel Encapsulation Attribute) of the first route.

In another possible implementation, the at least one sub-TLV may be carried in network layer reachability information (network layer reachability information, NLRI) of the first route.

In a possible implementation, the first user site egress device may further receive the identification information of the target object, a second path index, and a second path performance metrics that are advertised by a second gateway, where the second path index identifies a second path for the second gateway to access the target object, and the second path performance metrics indicates performance of the second path. Correspondingly, when selecting a target path, the first user site egress device may select, based on the first path performance metrics and the second path performance metrics, the target path for accessing the target object. For example, when the performance of the second path is better than the performance of the first path, a path including the second path is preferably determined as the target path. In this manner, the first user site egress device can select a target path with better performance as much as possible, thereby effectively improving access experience of accessing the target object.

In a possible implementation, the first gateway and the second gateway may belong to a same gateway site. The first gateway and the second gateway belong to a same site, gateways in the gateway site form a cluster gateway, the cluster gateway may include a plurality of gateways, and the first gateway and the second gateway may be two gateways in the cluster gateway.

In a possible implementation, the second gateway may advertise the identification information of the target object, a second path index, and a second path performance metrics to the first user site device through a second route. In other words, in a specific implementation of receiving the identification information of the target object, the second path index, and the second path performance metrics that are advertised by the second gateway, the first user site egress device may receive the second route advertised by the second gateway, where the second route includes the identification information of the target object, the second path index, and the second path performance metrics.

In a possible implementation, the second path index is a path number of the second path, an MPLS label allocated by the second gateway to the second path, or an SRv6 SID allocated by the second gateway to the second path. In a possible implementation, when the target object is an SaaS application and the second path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that the node performs SRv6 decapsulation, and sends the packet to the target SaaS application based on the outbound interface corresponding to the SRv6 SID.

In a possible implementation, the second route further includes indication information, the indication information indicates a type of the second path index carried in the second route, and the type is a path number, an MPLS label, or an SRv6 SID.

In a possible implementation, a route type field of the second route indicates that the second route is a path performance route associated with the target object.

In a possible implementation, the second route is a route advertised based on an SD-WAN address family or an SD-WAN subsequent address family.

In a possible implementation, the first user site egress device may further receive the identification information of the target object, a third path index, and a third path performance metrics that are advertised by a second user site egress device, where the third path index identifies a third path for the second user site egress device to access the target object through the internet, and the third path performance metrics indicates performance of the third path. Correspondingly, when selecting a target path, the first user site egress device may select, based on the first path performance metrics and the third path performance metrics, the target path for accessing the target object. For example, a path with better performance is selected as the target path based on the first path performance metrics and the third performance metrics.

In a possible implementation, the second user site egress device may advertise the identification information of the target object, a third path index, and a third path performance metrics to the first user site device by using a first protocol packet. In other words, in a specific implementation of receiving the identification information of the target object, the third path index, and the third path performance metrics that are advertised by the second user site egress device, the first user site egress device may receive the first protocol packet advertised by the second user site egress device, where the first protocol packet includes the identification information of the target object, the third path index, and the third path performance metrics.

In a possible implementation, the first user site egress device and the second user site egress device may belong to a same user site. The user site egress devices in the user site form a cluster egress device, the cluster egress device may include a plurality of user site egress devices, and the first user site egress device and the second user site egress device may be two user site egress devices in the cluster egress device. The first protocol packet may be a protocol packet exchanged between user site egress devices in the cluster egress device.

In a possible implementation, the first user site egress device accesses the first gateway through an SD-WAN tunnel.

In a possible implementation, the first user site egress device accesses the first gateway through the internet.

In a possible implementation, when the first gateway may further access the target object through a fourth path, the first user site egress device may receive the identification information of the target object, a fourth path index, and a fourth path performance metrics that are advertised by the first gateway, where the fourth path index identifies a fourth path for the first gateway to access the target object, and the fourth path performance metrics indicates performance of the fourth path. Correspondingly, when selecting a target path, the first user site egress device may select, based on the first path performance metrics and the fourth path performance metrics, the target path for accessing the target object. For example, a path with better performance is selected as the target path based on the first path performance metrics and the fourth performance metrics.

In a possible implementation, receiving the identification information of the target object, the fourth path index, and the fourth path performance metrics that are advertised by the first gateway includes: receiving a third route advertised by the first gateway, where the third route includes the identification information of the target object, the fourth path index, and the fourth path performance metrics.

In a possible implementation, the first user site egress device may further advertise the identification information of the target object, a fifth path index, and a fifth path performance metrics to the second user site egress device, where the fifth path index identifies a fifth path for the first user site egress device to access the target object through the internet, and the fifth path performance metrics indicates performance of the fifth path. In this way, when selecting a target path, the second user site egress device may select, based on the fifth path performance metrics, the target path for accessing the target object.

In a possible implementation, the first user site egress device and the second user site egress device may further advertise, to each other, performance of a path between the first user site egress device and the gateway site and performance of a path between the second user site egress device and the gateway site, to better select a target path for accessing the target object. For example, the first user site egress device and the second user site egress device may advertise, to each other, performance of an SD-WAN tunnel path between the first user site egress device and the first gateway and performance of an SD-WAN tunnel path between the second user site egress device and the first gateway. For another example, the first user site egress device and the second user site egress device may advertise, to each other, performance of an SD-WAN tunnel path between the first user site egress device and the second gateway and performance of an SD-WAN tunnel path between the second user site egress device and the second gateway.

In a possible implementation, the first user site egress device may receive a first service packet for accessing the target object, and encapsulate a target path index identifying the target path in the first service packet, to obtain a second service packet. After obtaining the second service packet, the first user site egress device may send the second service packet. The target path index indicates a target path for accessing the target object. In this solution, the target path index of the target path for accessing the target object may be encapsulated in the service packet, so that a forwarding device accesses the target object based on the target path, thereby improving access experience of accessing the target object.

In a possible implementation, generic routing encapsulation (generic routing encapsulation, GRE) may be used for the second service packet. In this case, the second service packet includes a generic routing encapsulation GRE header, and the GRE header includes the target path index.

In a specific example, when the target path index is an MPLS label, the second service packet may be encapsulated by using an MPLS in GRE protocol. In this case, the second service packet includes an outer internet protocol (Internet Protocol, IP) header, a GRE header, and a payload, the GRE header includes an MPLS label stack, the MPLS label stack includes the target path index, and the payload includes the first service packet. In an example, the target path index may be a stack bottom label of the MPLS label stack.

In another specific example, when the target path index is an SRv6 SID, the second service packet may be encapsulated by using an SRv6 in GRE protocol. In this case, the second service packet includes an outer IP header, a GRE header, and a payload, the GRE header includes an SRv6 SID list (list), the SRv6 SID list includes the target path index, and the payload includes the first service packet. In an example, the target path index may be a last SID in the SRv6 SID list.

In a possible implementation, when the target path index is an MPLS label, the second service packet may be encapsulated by using the MPLS in user datagram protocol (User Datagram Protocol, UDP). In this case, the second service packet includes an outer IP header, a UDP header, an MPLS label stack, and a payload, the MPLS label stack includes the target path index, the payload includes the first service packet, and the MPLS label stack is located between the UDP header and the payload. In an example, the target path index may be a stack bottom label of the MPLS label stack.

In a possible implementation, when the target path index is an SRv6 SID, the second service packet may be encapsulated by using an SRv6 in general network virtualization encapsulation (generic network virtualization encapsulation, GENEVE) protocol. In this case, the second service packet includes an outer IP header, a GENEVE header, and a payload, the GENEVE header includes an SRv6 SID list, the SRv6 SID list includes the target path index, and the payload includes the first service packet. In a specific example, the target path index may be a last SID in the SRv6 SID list.

In a possible implementation, in a specific implementation of receiving the first service packet, the first user site egress device may receive the first service packet sent by the second user site device. Specifically, the first user site egress device may receive a third service packet sent by the second user site egress device, where the third service packet includes the first service packet and the second path index. In this case, in an example, if a path from the first user site egress device to the second gateway is reachable, the first user site egress device may determine the second path index as the target path index, and encapsulate the target path index in the first service packet, to obtain the second service packet, so as to access the target object through the second path for the second gateway to access the target object. In another example, if the first user site egress device determines that a path to the second gateway is unreachable, the first user site egress device may reselect a target path for accessing the target object, and further encapsulate a target path index in the first service packet, to obtain a second service packet. For example, the first user site egress device chooses to access the target object through the first path or the fourth path for the first gateway to access the target object, and further encapsulates the first path index or the fourth path index in the first service packet, to obtain the second service packet.

In a possible implementation, the third service packet may include an IP header and a payload, the payload includes the first service packet, and a second path index is included between the IP header and the payload. In this case, the third service packet is encapsulated in a simple manner, and is not encapsulated in a form such as GRE or GENEVE. This simplifies an encapsulation form of the third service packet, and also simplifies performance overheads required for transmitting a service packet between user sites.

In another possible implementation, the first user site egress device may receive the first service packet sent by user equipment such as a user terminal, and further encapsulate, in the first service packet, a target path index of a target path selected by the first user site egress device, to obtain a second service packet.

In a possible implementation, in a specific implementation of sending the second service packet, the first user site egress device may send the second service packet to the first gateway through a path established between the first user site egress device and the first gateway; or send the second service packet to the second user site egress device, to forward the second service packet through the second user site egress device.

According to a second aspect, an embodiment of this application provides an information advertisement method. The method may be applied to a first gateway. The first gateway may obtain a first path performance metrics of a first path for the first gateway to access a target object, where the first path performance metrics indicates performance of the first path. After obtaining the first path performance metrics, the first gateway may advertise identification information of the target object, a first path index, and the first path performance metrics to a first user site egress device, where the first path index identifies the first path. It can be learned that the first gateway may advertise, to the first user site egress device, the first path performance metrics of the first path for the first gateway to access the target object. In this way, the first user site egress device may select, based on the performance of the first path for the first gateway to access the target object, a target path for accessing the target object, so that the selected target path can provide good quality of service. Correspondingly, good quality of service can be obtained when the target object is accessed through the target path, thereby improving access experience of accessing the target object.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, advertising the identification information of the target object, the first path index, and the first path performance metrics to the first user site egress device includes: advertising a first route to the first user site egress device, where the first route includes the identification information of the target object, the first path index, and the first path performance metrics.

In a possible implementation, the first route further includes indication information, the indication information indicates a type of the first path index, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the method further includes: advertising, to the first user site egress device, a site identifier of a site to which the first gateway belongs, an application type, and a node identifier node ID of the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

In a possible implementation, the method further includes: advertising the identification information of the target object, the first path index, and the first path performance metrics to a second user site egress device.

In a possible implementation, advertising the identification information of the target object, the first path index, and the first path performance metrics to the second user site egress device includes: advertising a second route to the second user site egress device, where the second route includes the identification information of the target object, the first path index, and the first path performance metrics.

In a possible implementation, the method further includes: advertising the identification information of the target object, the first path index, and the first path performance metrics to a second gateway.

In a possible implementation, the method further includes: obtaining a second path performance metrics of a second path for the first gateway to access the target object, where the second path performance metrics indicates performance of the second path; and advertising the identification information of the target object, a second path index, and the second path performance metrics to the first user site egress device, where the second path index identifies the second path.

In a possible implementation, advertising the identification information of the target object, the second path index, and the second path performance metrics to the first user site egress device includes: advertising a third route to the first user site egress device, where the third route includes the identification information of the target object, the second path index, and the second path performance metrics.

In a possible implementation, the method further includes: receiving an encapsulated first service packet, where the first path index is encapsulated in an outer layer of the first service packet; and forwarding the first service packet based on the first path index through the first path.

In a possible implementation, the encapsulated first service packet includes a generic routing encapsulation GRE header, and the GRE header includes the first path label.

In a possible implementation, when the first path index is an MPLS label, the encapsulated first service packet includes a UDP header, an MPLS label stack, and a payload, the MPLS label stack includes the first path index, the payload carries the first service packet, and the MPLS label stack is located between the UDP header and the payload.

In a possible implementation, when the first path index is an SRv6 SID, the encapsulated first service packet includes a generic network virtualization encapsulation GENEVE header, the GENEVE header includes a segment list SID list, and the SID list includes the first path index.

According to a third aspect, an embodiment of this application provides a routing apparatus. The apparatus may include a transceiver unit and a processing unit, the transceiver unit is configured to perform a receiving and/or sending operation performed by the first user site egress device according to the first aspect, and the processing unit is configured to perform an operation other than the receiving and/or sending operation performed by the first user site egress device according to the first aspect.

In a specific example, the routing apparatus includes a receiving unit and a processing unit. The receiving unit is configured to receive identification information of a target object, a first path index, and a first path performance metrics that are advertised by a first gateway, where the first path index identifies a first path for the first gateway to access the target object, and the first path performance metrics indicates performance of the first path; and the processing unit is configured to select, based on the first path performance metrics, a target path for accessing the target object.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, the receiving unit is configured to receive a first route advertised by the first gateway, where the first route includes the identification information of the target object, the first path index, and the first path performance metrics.

In a possible implementation, the first route further includes indication information, the indication information indicates a type of the first path index carried in the first route, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the receiving unit is further configured to receive a site identifier of a site to which the first gateway belongs, an application type, and a node identifier node ID of the first gateway that are advertised by the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

In a possible implementation, the receiving unit is further configured to receive the identification information of the target object, a second path index, and a second path performance metrics that are advertised by a second gateway, where the second path index identifies a second path for the second gateway to access the target object, and the second path performance metrics indicates performance of the second path; and the processing unit is configured to select, based on the first path performance metrics and the second path performance metrics, the target path for accessing the target object.

In a possible implementation, the receiving unit is configured to receive a second route advertised by the second gateway, where the second route includes the identification information of the target object, the second path index, and the second path performance metrics.

In a possible implementation, the receiving unit is further configured to receive the identification information of the target object, a third path index, and a third path performance metrics that are advertised by a second user site egress device, where the third path index identifies a third path for the second user site egress device to access the target object through the internet, and the third path performance metrics indicates performance of the third path; and the processing unit is configured to select, based on the first path performance metrics and the third path performance metrics, the target path for accessing the target object.

In a possible implementation, the first user site egress device accesses the first gateway through an SD-WAN tunnel.

In a possible implementation, the receiving unit is further configured to receive the identification information of the target object, a fourth path index, and a fourth path performance metrics that are advertised by the first gateway, where the fourth path index identifies a fourth path for the first gateway to access the target object, and the fourth path performance metrics indicates performance of the fourth path; and the processing unit is configured to select, based on the first path performance metrics and the fourth path performance metrics, the target path for accessing the target object.

In a possible implementation, the receiving unit is configured to receive a third route advertised by the first gateway, where the third route includes the identification information of the target object, the fourth path index, and the fourth path performance metrics.

In a possible implementation, the receiving unit is further configured to receive a first service packet for accessing the target object; the processing unit is further configured to encapsulate a target path index identifying the target path in the first service packet, to obtain a second service packet; and the apparatus further includes a sending unit, configured to send the second service packet.

In a possible implementation, the second service packet includes a generic routing encapsulation GRE header, and the GRE header includes the target path index.

In a possible implementation, when the target path index is an MPLS label, the second service packet includes a user datagram protocol UDP header, an MPLS label stack, and a payload, the MPLS label stack includes the target path index, the payload includes the first service packet, and the MPLS label stack is located between the UDP header and the payload.

In a possible implementation, when the target path index is an SRv6 SID, the second service packet includes a generic network virtualization encapsulation GENEVE header, the GENEVE header includes an SRv6 segment list SID list, and the SRv6 SID list includes the target path index.

In a possible implementation, the sending unit is configured to: send the second service packet to the first gateway through a path established between the first user site egress device and the first gateway; or send the second service packet to the second user site egress device, to forward the second service packet through the second user site egress device.

In a possible implementation, the receiving unit is configured to receive a third service packet from the second user site egress device, where the third service packet includes the first service packet and the second path index, and the second path index identifies the second path for the second gateway to access the target object; and the processing unit is configured to: in response to determining that a path to the second gateway is unreachable, encapsulate the target path index in the first service packet, to obtain the second service packet; or determine the second path index as the target path index, and encapsulate the target path index in the first service packet, to obtain the second service packet.

In a possible implementation, the third service packet includes an IP header and a payload, the second path index is located between the IP header and the payload, and the payload includes the first service packet.

In a possible implementation, the processing unit is further configured to store a correspondence between the identification information of the target object, the first path index, and the first path performance metrics.

According to a fourth aspect, an embodiment of this application provides an information advertisement apparatus. The apparatus may include a transceiver unit and a processing unit, the transceiver unit is configured to perform a receiving and/or sending operation performed by the first gateway according to the second aspect, and the processing unit is configured to perform an operation other than the receiving and/or sending operation performed by the first gateway according to the second aspect.

In a specific example, the information advertisement apparatus includes a processing unit and a sending unit. The processing unit is configured to obtain a first path performance metrics of a first path for the first gateway to access a target object, where the first path performance metrics indicates performance of the first path; and the sending unit is configured to advertise identification information of the target object, a first path index, and the first path performance metrics to a first user site egress device, where the first path index identifies the first path.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, the sending unit is configured to advertise a first route to the first user site egress device, where the first route includes the identification information of the target object, the first path index, and the first path performance metrics.

In a possible implementation, the first route further includes indication information, the indication information indicates a type of the first path index, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the sending unit is further configured to advertise, to the first user site egress device, a site identifier of a site to which the first gateway belongs, an application type, and a node identifier node ID of the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

In a possible implementation, the sending unit is further configured to advertise the identification information of the target object, the first path index, and the first path performance metrics to a second user site egress device.

In a possible implementation, the sending unit is configured to advertise a second route to the second user site egress device, where the second route includes the identification information of the target object, the first path index, and the first path performance metrics.

In a possible implementation, the sending unit is further configured to advertise the identification information of the target object, the first path index, and the first path performance metrics to a second gateway.

In a possible implementation, the processing unit is further configured to obtain a second path performance metrics of a second path for the first gateway to access a target object, where the second path performance metrics indicates performance of the second path; and the sending unit is further configured to advertise identification information of the target object, a second path index, and the second path performance metrics to the first user site egress device, where the second path index identifies the second path.

In a possible implementation, the sending unit is configured to advertise a third route to the first user site egress device, where the third route includes the identification information of the target object, the second path index, and the second path performance metrics.

In a possible implementation, the apparatus further includes a receiving unit, configured to receive an encapsulated first service packet, where the first path index is encapsulated in an outer layer of the first service packet; and the sending unit is further configured to forward the first service packet based on the first path index through the first path.

In a possible implementation, the encapsulated first service packet includes a generic routing encapsulation GRE header, and the GRE header includes the first path label.

In a possible implementation, when the first path index is an MPLS label, the encapsulated first service packet includes a UDP header, an MPLS label stack, and a payload, the MPLS label stack includes the first path index, the payload carries the first service packet, and the MPLS label stack is located between the UDP header and the payload.

In a possible implementation, when the first path index is an SRv6 SID, the encapsulated first service packet includes a generic network virtualization encapsulation GENEVE header, the GENEVE header includes a segment list SID list, and the SID list includes the first path index.

According to a fifth aspect, an embodiment of this application provides a communication apparatus, including a processor and a memory.

The memory is configured to store instructions. The processor is configured to execute the instructions, so that the communication apparatus performs the method according to any one of the first aspect and the implementations of the first aspect, or the communication apparatus performs the method according to any one of the second aspect and the implementations of the second aspect.

According to a sixth aspect, an embodiment of this application provides a computer-readable storage medium, including instructions or a computer program. When the instructions or the computer program is run on a processor, the method according to any one of the first aspect and the implementations of the first aspect is implemented, or the method according to any one of the second aspect and the implementations of the second aspect is implemented.

According to a seventh aspect, an embodiment of this application provides a computer program product, including a computer program product. When the computer program product runs on a processor, the method according to any one of the first aspect and the implementations of the first aspect or the method according to any one of the second aspect and the implementations of the second aspect is performed.

According to an eighth aspect, an embodiment of this application provides a communication system. The communication system includes a first user site egress device that performs the method according to any one of the first aspect and the implementations of the first aspect, and a first gateway that performs the method according to any one of the second aspect and the implementations of the second aspect.

### BRIEF DESCRIPTION OF DRAWINGS

To describe the technical solutions in embodiments of this application or in the conventional technology more clearly, the following briefly describes the accompanying drawings for describing embodiments or the conventional technology. It is clear that, the accompanying drawings in the following descriptions show only some embodiments recorded in this application, and a person of ordinary skill in the art may still derive other drawings from these accompanying drawings without creative efforts.
FIG. 1a is a diagram of an example application scenario according to an embodiment of this application;
FIG. 1b is a diagram of another example application scenario according to an embodiment of this application;
FIG. 1c is a diagram of still another example application scenario according to an embodiment of this application;
FIG. 2 is a signaling interaction diagram of a routing method according to an embodiment of this application;
FIG. 3a is a diagram of a structure of MP_REACH_NLRI according to an embodiment of this application;
FIG. 3b is a diagram of a structure of a sub-TLV 1 according to an embodiment of this application;
FIG. 3c is a diagram of a structure of a sub-TLV 2 according to an embodiment of this application;
FIG. 3d is a diagram of a structure of a sub-TLV 3 according to an embodiment of this application;
FIG. 3e is a diagram of a structure of a sub-TLV 4 according to an embodiment of this application;
FIG. 3f is a diagram of a structure of a sub-TLV 5 according to an embodiment of this application;
FIG. 3g is a diagram of a structure of a sub-TLV 6 according to an embodiment of this application;
FIG. 3h is a diagram of a structure of a sub-TLV 7 according to an embodiment of this application;
FIG. 3i is a diagram of a structure of a sub-TLV 8 according to an embodiment of this application;
FIG. 3j is a diagram of a structure of MP_REACH_NLRI according to an embodiment of this application;
FIG. 3k is a diagram of a structure of a protocol packet according to an embodiment of this application;
FIG. 4 is a schematic flowchart of a packet forwarding method according to an embodiment of this application;
FIG. 5a is a diagram of a structure of a service packet 2 according to an embodiment of this application;
FIG. 5b is a diagram of a structure of another service packet 2 according to an embodiment of this application;
FIG. 5c is a diagram of a structure of another service packet 2 according to an embodiment of this application;
FIG. 5d is a diagram of a structure of another service packet 2 according to an embodiment of this application;
FIG. 5e is a diagram of a structure of another service packet 2 according to an embodiment of this application;
FIG. 5f is a diagram of a structure of another service packet 2 according to an embodiment of this application;
FIG. 6 is a diagram of an example application scenario according to an embodiment of this application;
FIG. 7a is a schematic flowchart of a routing method according to an embodiment of this application;
FIG. 7b is a schematic flowchart of an information advertisement method according to an embodiment of this application;
FIG. 8a is a diagram of a structure of a communication apparatus according to an embodiment of this application;
FIG. 8b is a diagram of a structure of a communication apparatus according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

Embodiments of this application provide a routing method, an information advertisement method, and an apparatus.

For ease of understanding, possible application scenarios of embodiments of this application are first described.

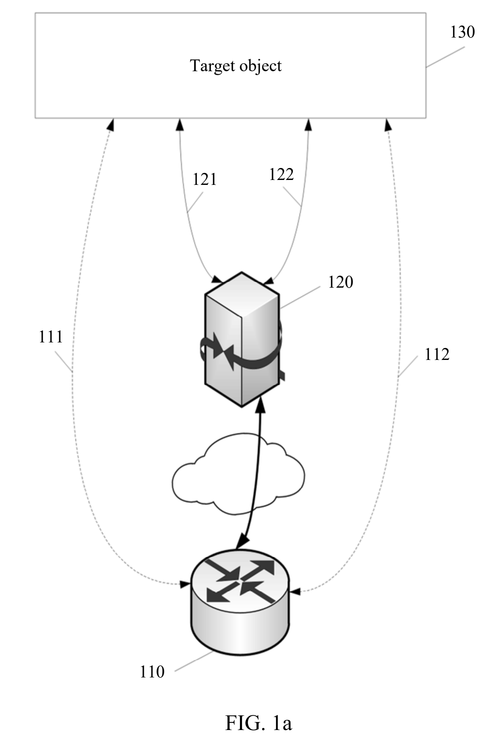

FIG. 1a is a diagram of an example application scenario according to an embodiment of this application. As shown in FIG. 1a, a user site egress device 110 of a user site may access a target object 130 through a direct internet access (direct internet access, DIA) link 111 or 112 connected to the user site egress device 110. In addition, a gateway in a gateway site has a strong capability, and may provide a service of accessing the target object for the user site egress device. Specifically, as shown in FIG. 1a, the user site egress device 110 may access the target object 130 through a gateway site. In an example, in FIG. 1a, the user site egress device 110 may access the target object 130 through a path 121 connected to a gateway 120 in the gateway site. In another example, the user site egress device 110 may access the target object 130 through a path 122 connected to the gateway 120. A specific manner in which the user site egress device 110 accesses the gateway 120 is not limited in this application. For example, the user site egress device 110 may access the gateway 120 through the internet, or may access the gateway 120 through an SD-WAN tunnel.

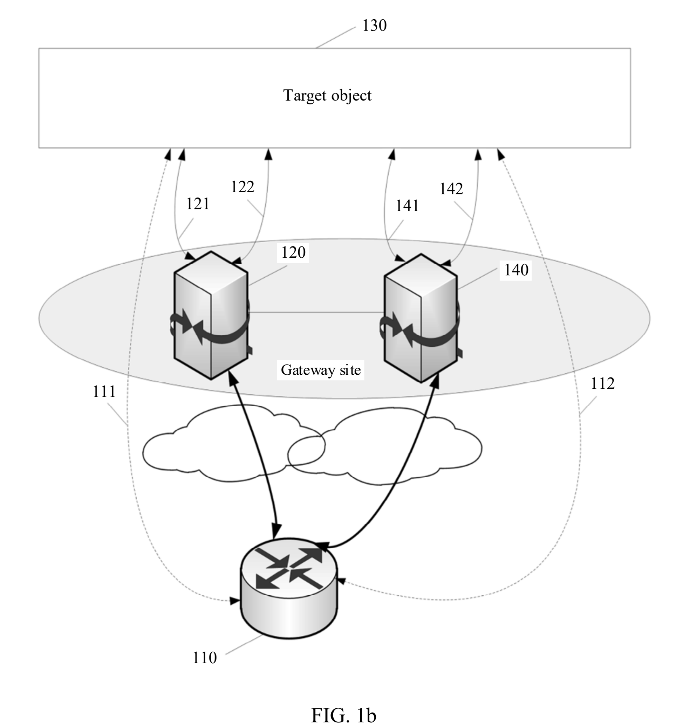

In an example, in addition to the gateway 120, the gateway site may further include a gateway 140, as shown in FIG. 1b. FIG. 1b is a diagram of another example application scenario according to an embodiment of this application. In this scenario, in an example, the user site egress device 110 may access the target object 130 through a path 141 connected to the gateway 140. In another example, the user site egress device 110 may access the target object 130 through a path 142 connected to the gateway 140.

In some embodiments, the gateway 120 and the gateway 140 in the gateway site may form a cluster gateway, and a plurality of gateways in the cluster gateway may communicate with each other by using an intra-cluster protocol. In addition, a quantity of gateways included in the gateway site is not limited to 2 shown in FIG. 1b. In addition to the gateway, the gateway site may further include a network device of another role.

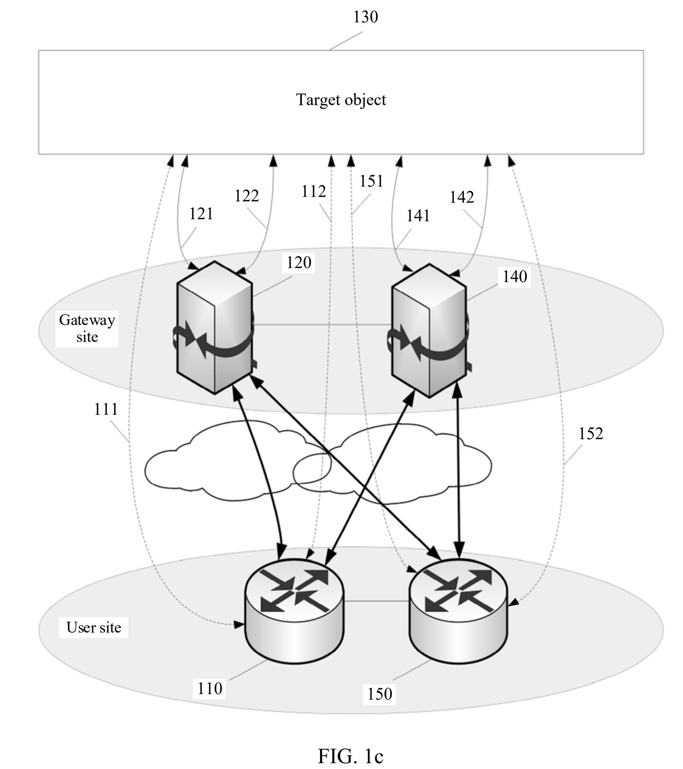

In another example, in addition to the user site egress device 110, the user site may further include a user site egress device 150, as shown in FIG. 1c. FIG. 1c is a diagram of another example application scenario according to an embodiment of this application. The user site egress device 150 may access the target object 130 through a DIA link 151 or 152 connected to the user site egress device 150. The user site egress device 150 may also access the target object 130 through the gateway site. For example, the user site egress device may access the target object 130 through a path 121 or a path 122 connected to the gateway 120. For another example, the user site egress device may access the target object 130 through a path 141 or a path 142 connected to the gateway 140.

In some embodiments, the user site egress device 110 and the user site egress device 150 in the user site may form a cluster egress device, and a plurality of user site egress devices in the cluster egress device may communicate with each other by using an intra-cluster protocol. In addition, a quantity of user site egress devices included in the user site is not limited to 2 shown in FIG. 1c.

The user site egress devices shown in FIG. 1a to FIG. 1c may be, for example, customer-premises equipments (customer-premises equipment, CPE) in a branch site.

The target objects shown in FIG. 1a to FIG. 1c may be, for example, data centers or may be SaaS applications.

Currently, when accessing a target object, the user site egress device may select, based on locally detected performance of a path for accessing the target object, a path for accessing the target object. The user site egress device 110 is used as an example. The user site egress device 110 may determine, based on performance of a DIA link 111, performance of a DIA link 112, and performance of a DIA link or an SD-WAN tunnel between the user site egress device 110 and the gateway site that are detected by the user site egress device 110, a path for accessing the target object 130. However, in this manner, the determined path may not be a most appropriate path. Correspondingly, obtained quality of service is not good when the selected path is used to access the target object 130. Because the user site egress device cannot learn of performance of a path from the gateway site to the target object, the gateway site egress device cannot accurately select a better path for accessing the target object.

In view of this, an embodiment of this application provides a routing method and an information notification method, so that a user site egress device can select, based on performance of a path for a gateway to access a target object, a path for accessing the target object, so that the selected target path can provide good quality of service, thereby improving access experience. With reference to the accompanying drawings, the following describes the method provided in embodiments of this application.

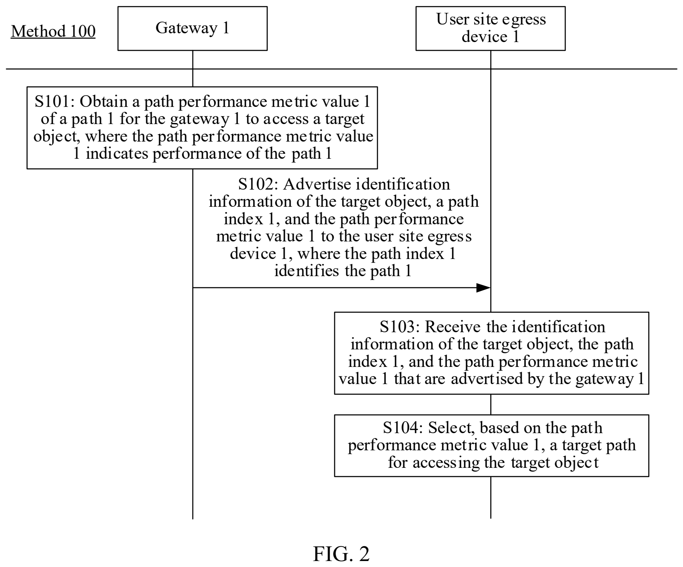

FIG. 2 is a signaling interaction diagram of a routing method according to an embodiment of this application. The routing method 100 shown in FIG. 2 may include S101 to S104.

In this embodiment of this application, the method 100 shown in FIG. 2 may be applied to the application scenario shown in FIG. 1a, FIG. 1b, or FIG. 1c.

When the method 100 is applied to the scenario shown in FIG. 1a, the gateway 1 may correspond to the gateway 120 shown in FIG. 1a, the user site egress device may correspond to the user site egress device 110 shown in FIG. 1a, and the path 1 may be the path 121 or the path 122 shown in FIG. 1a.

When the method 100 is applied to the application scenario shown in FIG. 1b, in an example, the gateway 1 may correspond to the gateway 120 shown in FIG. 1b, the user site egress device may correspond to the user site egress device 110 shown in FIG. 1b, and the path 1 may be the path 121 or the path 122 shown in FIG. 1b. In another example, the gateway 1 may correspond to the gateway 140 shown in FIG. 1b, the user site egress device may correspond to the user site egress device 110 shown in FIG. 1b, and the path 1 may be the path 141 or the path 142 shown in FIG. 1b.

When the method 100 is applied to the application scenario shown in FIG. 1c, in an example, the gateway 1 may correspond to the gateway 120 shown in FIG. 1c, the user site egress device may correspond to the user site egress device 110 or the user site egress device 150 shown in FIG. 1c, and the path 1 may be the path 121 or the path 122 shown in FIG. 1c. In another example, the gateway 1 may correspond to the gateway 140 shown in FIG. 1c, the user site egress device may correspond to the user site egress device 110 or the user site egress device 150 shown in FIG. 1c, and the path 1 may be the path 141 or the path 142 shown in FIG. 1c.

S101: The gateway 1 obtains a path performance metrics 1 of a path 1 for the gateway 1 to access a target object, where the path performance metrics 1 indicates performance of the path 1.

In an example, the gateway 1 may detect the performance of the path 1 to obtain the path performance metrics 1 indicating the performance of the path 1. A specific implementation in which the gateway 1 detects the performance of the path 1 is not specifically limited in this embodiment of this application. In an example, the gateway 1 may detect the performance of the path 1 by using a data packet or a protocol packet, to obtain one or more performance parameters such as delay, packet loss rate, jitter, and bandwidth.

In this embodiment of this application, the path performance metrics 1 may include at least one metrics indicating the performance of the path 1. Delay, packet loss rate, jitter, bandwidth, path status, and QoE can all reflect the performance of the path 1. Therefore, in an example, the path performance metrics 1 may include one or more of delay, packet loss rate, jitter, bandwidth, path status, and QoE. In an example, the path status may be, for example, determined based on performance parameters such as delay, packet loss rate, jitter, and bandwidth. The path status includes but is not limited to best (best), good (good), acceptable (acceptable), and issue (issue). In another example, the QoE may be, for example, determined based on performance parameters such as delay, packet loss rate, jitter, and bandwidth. The QoE may be a specific value, for example, 75, 80, or 85. A larger value corresponding to the QoE indicates better performance of the path.

S102: The gateway 1 advertises the identification information of the target object, a path index 1, and the path performance metrics 1 to the user site egress device 1, where the path index 1 identifies the path 1.

S103: The user site egress device 1 receives the identification information of the target object, the path index 1, and the path performance metrics 1 that are advertised by the gateway 1.

After obtaining the path performance metrics 1 of the path 1, the gateway 1 may advertise the identification information of the target object, the path index 1 identifying the path 1, and the path performance metrics 1 to the user site egress device 1. Correspondingly, the user site egress device 1 may receive the identification information of the target object, the path index 1, and the path performance metrics 1 that are advertised by the gateway 1.

The identification information of the target object is used to identify the target object, and the identification information of the target object may be a global identifier of the target object, or may be other information that can be used to identify the target object. In an example, when the target object is an SaaS application, the identification information of the target object may include an application ID, an application name, and/or an application domain name. When the target object is a data center, the identification information of the target object may be an IP address and a tenant identifier of the data center.

The path index 1 is used to identify the path 1, and the path index 1 may be any information that can identify the path 1. The path index 1 may be used to identify an outbound interface for accessing the target object. In other words, a gateway device may determine, based on the path index 1, the outbound interface for accessing the target object. In an example, the path index 1 may be a path number of the path 1. For example, a plurality of paths for the gateway 1 to access the target object may be numbered in sequence, and each path corresponds to one path number. The path number may be a local number or a global number. In another example, the path index 1 may be an MPLS label allocated by the gateway 1 to the path 1. In another example, the path index 1 may be an SRv6 SID allocated by the gateway 1 to the path 1.

When the path index 1 is an SRv6 SID, a node function associated with the SRv6 SID is SRv6 decapsulation, and forwarding a packet to the target object through an outbound interface corresponding to the SRv6 SID. In an example, when the target object is an SaaS application, a node function associated with the SRv6 SID is SRv6 decapsulation, and sending a packet to a target SaaS application based on an outbound interface corresponding to the SRv6 SID. In a specific implementation, the node function associated with the SRv6 SID is End.DT2SaaSPath, and End.DT2SaaSPath indicates that a node performs SRv6 decapsulation, and forwards the packet to the target SaaS application based on the outbound interface corresponding to the SRv6 SID.

In an example, the gateway 1 may advertise the identification information of the target object, the path index 1, and the path performance metrics 1 to the user site egress device 1 by using a protocol packet. The protocol packet is not specifically limited in this embodiment of this application. In a specific example, the gateway 1 may advertise the identification information of the target object, the path index 1, and the path performance metrics 1 to the user site egress device 1 by advertising a route 1 to the user site egress device 1. In other words, the gateway 1 may advertise the route 1 to the user site egress device 1, where the route 1 includes the identification information of the target object, the path index 1, and the path performance metrics 1. Correspondingly, the user site egress device 1 may receive the route 1 advertised by the gateway 1.

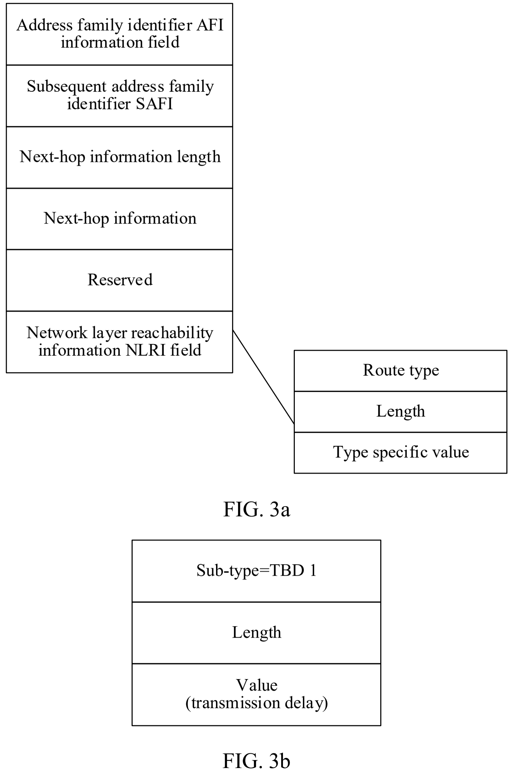

In an example, the gateway 1 may advertise the route 1 to the user site egress device 1 by using multiprotocol extensions for BGP (Multiprotocol Extensions for BGP, MP-BGP). The gateway 1 may advertise a BGP message 1 to the user site egress device 1. The BGP message 1 includes multiprotocol reachable network layer reachability information (Multiprotocol reachable network layer reachability information, MP_REACH _NLRI), and MP_REACH_NLRI is used to carry the route 1. In an example, a structure of MP_REACH_NLRI is shown in FIG. 3a. FIG. 3a is a diagram of a structure of MP_REACH_NLRI according to an embodiment of this application. As shown in FIG. 3a, MP_REACH_NLRI includes an address family identifier (address family identifier, AFI), a subsequent address family identifier (subsequent address family identifier, SAFI), a next hop information length field, a next hop information field, and an NLRI field.

In an example, the AFI field may identify a network layer protocol. For example, a value of the AFI field is 1, identifying an IPv4; or a value of the AFI field is 2, identifying an IPv6. For the value of the AFI field, refer to the related description part about an address family number (Address Family Number) in the request for comments (request for comments, RFC) 1700. Details are not described herein. The SAFI field identifies a type of a subsequent address family. For example, a value of the SAFI field is 1, identifying unicast; a value of the SAFI field is 2, identifying multicast; a value of the SAFI field is 74, identifying an SD-WAN; or a value of the SAFI field is 128, identifying a virtual private network (virtual private network, VPN).

In an example, a next-hop network address may be a network address of a next device on a path to a destination device.

In an example, the NLRI field may include one or more pieces of NLRI, each piece of NLRI includes a length field and an NLRI value field, and specific content of the NLRI value field may be determined based on a combination of the AFI field and the SAFI field.

The NLRI field includes a route type field, a length field, and a type specific value (type specific value) field. The route type field indicates a route type, the length field indicates a length of the type specific value field, and the type specific value field is used to carry a related value of a type corresponding to the route type field. In this embodiment of this application, a type indicated by the route type field is path performance route.

In an example, the route 1 may include indication information 1, and the indication information 1 indicates a type of a path index 1 carried in the route 1. The type of the path index 1 may include the path number, the MPLS label, or the SRv6 SID mentioned above. In this case, the user site egress device 1 may determine, based on the indication information 1, the type of the path label 1 identifying the path 1.

In an example, the route type field of the route 1 may indicate that the route 1 is a path performance route associated with the target object. When the target object is an SaaS application, the path performance route may be an SaaS path performance route; or when the target object is a data center, the path performance route may be a data center path performance route.

In an example, an SD-WAN tunnel may be established between the gateway 1 and the user site egress device 1. In a specific example, the gateway 1 and the user site egress device 1 may enable an SD-WAN address family. In this case, the route 1 may be a route advertised based on the SD-WAN address family. For example, the AFI field indicates an SD-WAN address family. In another specific example, the gateway 1 and the user site egress device 1 may enable an SD-WAN subsequent address family. In this case, the route 1 may be a route advertised based on the SD-WAN subsequent address family. For example, the SAFI field indicates an SD-WAN subsequent address family.

In an example, the gateway 1 may further advertise other information to the user site egress device 1, so that the user site egress device 1 can obtain richer information. In an example, the gateway 1 may advertise, to the user site egress device 1, a site identifier of a site to which the gateway 1 belongs, an application type, and a node identifier of the gateway 1.

The site to which the gateway 1 belongs may be a gateway site of the gateway 1.

The application type may indicate a quality of service requirement of at least one type of traffic supported by the target object. The quality of service requirement of the traffic may include: optimal (optimize), allowed (allow), and default (default). Optimal indicates that an optimal path needs to be used, allowed indicates that the quality of service requirement is lower than the optimal, and default indicates that there is no special requirement for quality of service.

The node identifier of the gateway 1 may be, for example, an IP address of the gateway 1 or a global identifier of the gateway 1. In an example, the node identifier of the gateway 1 may be used as identification information of the gateway 1.

In an example, when the gateway 1 advertises the path performance metrics 1 to the user site egress device 1 by advertising the route 1 to the user site egress device 1, the route 1 may include a target TLV, which is used to carry several metricss in the path performance metrics 1 and information about the target object. For example, a value field of the target TLV may carry a transmission delay of the path 1, a packet loss rate of the path 1, a bandwidth of the path 1, a path status of the path 1, QoE of the path 1, a name of the target object, and a domain name of the target object.

In another example, when the gateway 1 advertises the path performance metrics 1 to the user site egress device 1 by advertising the route 1 to the user site egress device 1, the route 1 may include at least one sub-TLV, where the at least one sub-TLV is used to carry several metricss in the path performance metrics 1 and information about the target object. In this manner, scalability of the route 1 is good. For example, when the path performance metrics 1 advertised by the gateway 1 increases or decreases, a corresponding sub-TLV is added or deleted in the route 1.

In an example, if the path performance metrics 1 includes a delay, the route 1 may include a sub-TLV 1. The sub-TLV 1 is used to carry a transmission delay of the path 1. In other words, the sub-TLV 1 may indicate the transmission delay of the path 1. The sub-TLV 1 may include a sub-type field, a length field, and a value field. The sub-type field of the sub-TLV 1 indicates that the sub-TLV 1 is used to carry the transmission delay of the path 1. The length field of the sub-TLV 1 indicates a length of the value field of the sub-TLV 1, and the value field of the sub-TLV 1 is used to carry the transmission delay. For a structure of the sub-TLV 1, refer to FIG. 3b for understanding. FIG. 3b is a diagram of a structure of a sub-TLV 1 according to an embodiment of this application. As shown in FIG. 3b, a value of a type field of the sub-TLV 1 is a TBD 1, and the TBD 1 indicates that the sub-TLV 1 is used to carry a transmission delay.

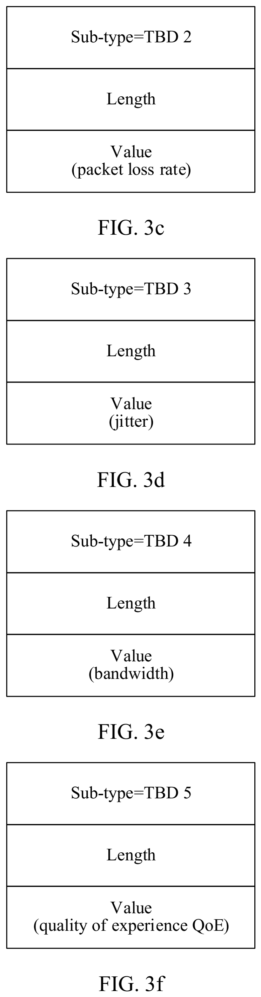

In another example, if the path performance metrics 1 includes a packet loss, the route 1 may include a sub-TLV 2, where the sub-TLV 2 is used to carry a packet loss rate of the path 1. In other words, the sub-TLV 2 may indicate the packet loss rate of the path 1. The sub-TLV 2 may include a sub-type field, a length field, and a value field. The sub-type field of the sub-TLV 2 indicates that the sub-TLV 2 is used to carry the packet loss rate. The length field of the sub-TLV 2 indicates a length of the value field of the sub-TLV 2, and the value field of the sub-TLV 2 is used to carry the packet loss rate of the path 1. For a structure of the sub-TLV 2, refer to FIG. 3c for understanding. FIG. 3c is a diagram of a structure of a sub-TLV 2 according to an embodiment of this application. As shown in FIG. 3c, a value of a type field of the sub-TLV 2 is a TBD 2, and the TBD 2 indicates that the sub-TLV 2 is used to carry a packet loss rate.

In another example, if the path performance metrics 1 includes a jitter, the route 1 may include a sub-TLV 3, where the sub-TLV 3 is used to carry a jitter of the path 1. In other words, the sub-TLV 3 may indicate the jitter of the path 1. The sub-TLV 3 may include a sub-type field, a length field, and a value field. The sub-type field of the sub-TLV 3 indicates that the sub-TLV 3 is used to carry the jitter. The length field of the sub-TLV 3 indicates a length of the value field of the sub-TLV 3, and the value field of the sub-TLV 3 is used to carry the jitter of the path 1. For a structure of the sub-TLV 3, refer to FIG. 3d for understanding. FIG. 3d is a diagram of a structure of a sub-TLV 3 according to an embodiment of this application. As shown in FIG. 3d, a value of a type field of the sub-TLV 3 is a TBD 3, and the TBD 3 indicates that the sub-TLV 3 is used to carry a jitter.

In another example, if the path performance metrics 1 includes a bandwidth, the route 1 may include a sub-TLV 4, where the sub-TLV 4 is used to carry a bandwidth of the path 1. In other words, the sub-TLV 4 may indicate the bandwidth of the path 1. The sub-TLV 4 may include a sub-type field, a length field, and a value field. The sub-type field of the sub-TLV 4 indicates that the sub-TLV 4 is used to carry the bandwidth. The length field of the sub-TLV 4 indicates a length of the value field of the sub-TLV 4, and the value field of the sub-TLV 4 is used to carry the bandwidth of the path 1. For a structure of the sub-TLV 4, refer to FIG. 3e for understanding. FIG. 3e is a diagram of a structure of a sub-TLV 4 according to an embodiment of this application. As shown in FIG. 3e, a value of a type field of the sub-TLV 4 is a TBD 4, and the TBD 4 indicates that the sub-TLV 4 is used to carry a bandwidth.

In another example, if the path performance metrics 1 includes a path status, the route 1 may include a sub-TLV 5, where the sub-TLV 5 is used to carry a path status of the path 1. In other words, the sub-TLV 5 may indicate the path status of the path 1. The sub-TLV 5 may include a sub-type field, a length field, and a value field. The sub-type field of the sub-TLV 5 indicates that the sub-TLV 5 is used to carry the path status. The length field of the sub-TLV 5 indicates a length of the value field of the sub-TLV 5, and the value field of the sub-TLV 5 is used to carry the path status of the path 1. For a structure of the sub-TLV 5, refer to FIG. 3f for understanding. FIG. 3f is a diagram of a structure of a sub-TLV 5 according to an embodiment of this application. As shown in FIG. 3f, a value of a type field of the sub-TLV 5 is a TBD 5, and the TBD 5 indicates that the sub-TLV 5 is used to carry a path status.

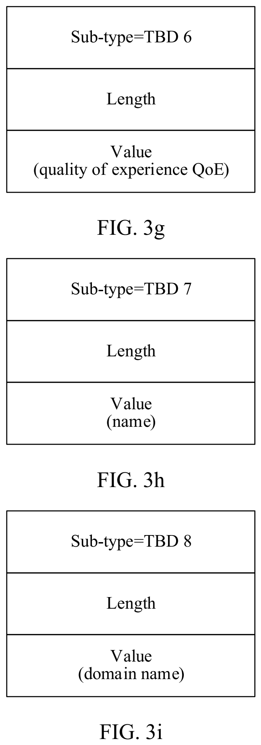

In another example, if the path performance metrics 1 includes QoE, the route 1 may include a sub-TLV 6, where the sub-TLV 6 is used to carry QoE of the path 1. In other words, the sub-TLV 6 may indicate the QoE of the path 1. The sub-TLV 6 may include a sub-type field, a length field, and a value field. The sub-type field of the sub-TLV 6 indicates that the sub-TLV 6 is used to carry the QoE. The length field of the sub-TLV 6 indicates a length of the value field of the sub-TLV 6, and the value field of the sub-TLV 6 is used to carry the QoE of the path 1. For a structure of the sub-TLV 6, refer to FIG. 3g for understanding. FIG. 3g is a diagram of a structure of a sub-TLV 6 according to an embodiment of this application. As shown in FIG. 3g, a value of a type field of the sub-TLV 6 is a TBD 6, and the TBD 6 indicates that the sub-TLV 6 is used to carry QoE.

In another example, if the route 1 includes a name of a target object, the route 1 may include a sub-TLV 7, where the sub-TLV 6 is used to carry a name of a target object. In other words, the sub-TLV 7 may indicate the name of the target object. The sub-TLV 7 may include a sub-type field, a length field, and a value field. The sub-type field of the sub-TLV 7 indicates that the sub-TLV 7 is used to carry the name of the target object. The length field of the sub-TLV 7 indicates a length of the value field of the sub-TLV 7, and the value field of the sub-TLV 7 is used to carry the name of the target object of the path 1. For a structure of the sub-TLV 7, refer to FIG. 3h for understanding. FIG. 3h is a diagram of a structure of a sub-TLV 7 according to an embodiment of this application. As shown in FIG. 3h, a value of a type field of the sub-TLV 7 is a TBD 7, and the TBD 7 indicates that the sub-TLV 7 is used to carry a name of a target object.

In another example, if the route 1 includes a domain name of a target object, the route 1 may include a sub-TLV 8, where the sub-TLV 8 is used to carry a domain name of a target object. In other words, the sub-TLV 8 may indicate the domain name of the target object. The sub-TLV 8 may include a sub-type field, a length field, and a value field. The sub-type field of the sub-TLV 8 indicates that the sub-TLV 8 is used to carry the domain name of the target object. The length field of the sub-TLV 8 indicates a length of the value field of the sub-TLV 8, and the value field of the sub-TLV 8 is used to carry the domain name of the target object of the path 1. For a structure of the sub-TLV 8, refer to FIG. 3i for understanding. FIG. 3i is a diagram of a structure of a sub-TLV 8 according to an embodiment of this application. As shown in FIG. 3i, a value of a type field of the sub-TLV 8 is a TBD 8, and the TBD8 indicates that the sub-TLV 8 is used to carry a domain name of a target object.

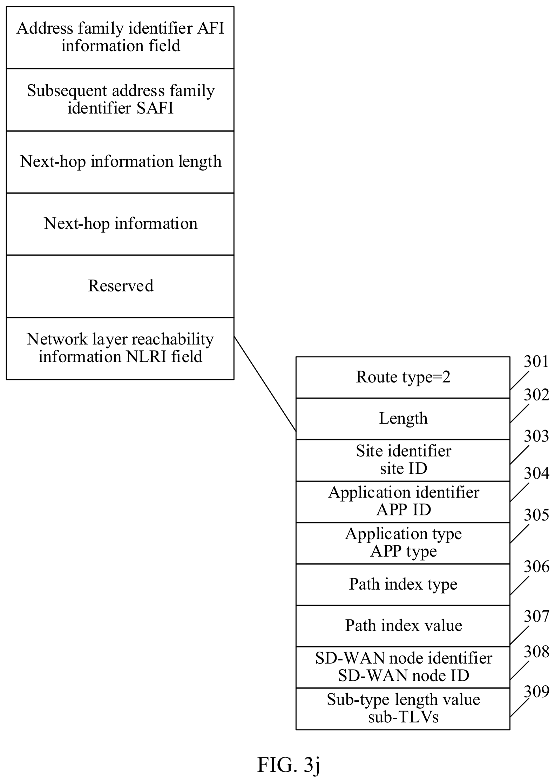

In a specific example, a structure of MP_REACH_NLRI used to advertise the route 1 may be shown in FIG. 3j. FIG. 3j is a diagram of a structure of MP_REACH_NLRI according to an embodiment of this application. An NLRI field of MP_REACH_NLRI shown in FIG. 3j includes a route type field 301, a length field 302, a site identifier (site ID) field 303, an application identifier (APP ID) field 304, an application type (APP type) field 305, a path index type (path index type) field 306, a path index value (path index value) field 307, an SD-WAN node identifier (SD-WAN node ID) field 308, and a sub-TLVs field 309.

The route type field 301 indicates that the route type is a path performance route associated with the target object.

The site ID field 303 indicates a site identifier of a site to which the gateway 1 belongs.

The APP ID field 304 is used to identify the target object. For example, when the target object is an SaaS application, the APP ID field 304 is used to carry an identifier of the SaaS application; or when the target object is a data center, the APP ID field 304 is used to carry an IP address and a tenant ID of the data center.

The APP type field 305 indicates a quality of service requirement of at least one type of traffic supported by the target object. For example, type 1 represents default (default), type 2 represents allowed (allow), type 3 represents optimal (optimize). Optimal indicates that an optimal path needs to be used, allowed indicates that the quality of service requirement is lower than the optimal, and default indicates that there is no special requirement for quality of service.

The path index type field 306 indicates a type of a path index. In this solution, the path index type field 306 indicates a type of a path index 1.

The path index value field 307 is used to carry a path index. In this solution, the path index value field 307 is used to carry a path index 1. A path index value may be used to identify an outbound interface for accessing the target object.

The SD-WAN node ID field 308 is used to carry an identifier of a gateway 1, for example, carry an IPv4 or IPv6 address of the gateway 1.

The sub-TLVs field 309 may include one or more of the sub-TLV 1 to the sub-TLV 8.

In another example, the sub-TLVs field 309 may not be carried in an NLRI field, but may be carried in a BGP path attribute. For example, the sub-TLVs may be carried in a metadata path attribute (Metadata Path Attribute) or a tunnel encapsulation attribute (Tunnel Encapsulation Attribute).

In another example, the NLRI field may not include the sub-TLVs field 309, but includes the foregoing target TLV. In another example, the target TLV may not be carried in an NLRI field, but may be carried in a metadata path attribute or a tunnel encapsulation attribute.

S104: The user site egress device 1 selects, based on the path performance metrics 1, a target path for accessing the target object.

After receiving the identification information of the target object, the path index 1, and the path performance metrics 1 that are advertised by the gateway 1, the user site egress device 1 may select, based on the path index metrics 1, the target path for accessing the target object. In a specific example, the user site egress device 1 may store a correspondence between the identification information of the target object, the path index 1, and the path performance metrics 1, to subsequently select, based on the correspondence, the target path for accessing the target object.

In an example, the user site egress device 1 may obtain, based on the path performance metrics 1 and a path performance metrics of a link between the user site egress device 1 and the gateway 1, a path performance metrics 1' for the user site egress device 1 to access the target object through a path 1' including the path 1, to select, based on the path performance metrics 1', the target path for accessing the target object. For example, the user site egress device 1 may select, based on the path performance metrics 1' and a path performance metrics of another path for the user site device 1 to access the target object, the target path for accessing the target object, for example, select a path with optimal performance as the target path. The path 1' includes the link between the user site egress device 1 and the gateway 1 and the path 1. The link between the user site egress device 1 and the gateway 1 may be an internet link or an SD-WAN tunnel.

It can be learned from the foregoing descriptions that, according to this solution in this embodiment of this application, the user site egress device 1 may select, based on performance of the path 1 for the gateway 1 to access the target object, the target path for accessing the target object, so that the selected target path can provide good quality of service. Correspondingly, good quality of service can be obtained when the target object is accessed through the target path, thereby improving access experience of accessing the target object.

In an example, when the method 100 is applied to the application scenario shown in FIG. 1b, the user site egress device 1 may further receive the identification information of the target object, a path index 2, and a path performance metrics 2 that are advertised by a gateway 2, where the path index 2 identifies a path 2 for the gateway 2 to access the target object, and the path performance metrics 2 indicates performance of the path 2. For the gateway 2 and the path 2, in an example, if the gateway 1 corresponds to the gateway 120 shown in FIG. 1b, the gateway 2 may correspond to the gateway 140 shown in FIG. 1b, and correspondingly, the path 2 may correspond to the path 141 or the path 142 shown in FIG. 1b. In another example, if the gateway 1 corresponds to the gateway 140 shown in FIG. 1b, the gateway 2 may correspond to the gateway 120 shown in FIG. 1b, and correspondingly, the path 2 may correspond to the path 121 or the path 122 shown in FIG. 1b.

In this embodiment of this application, for example, the gateway 2 may advertise the identification information of the target object, the path index 2, and the path performance metrics 2 to the user site egress device 1 by using a protocol packet. In a specific example, the gateway 2 may advertise a route 2 to the user site egress device 1, where the route 2 includes the identification information of the target object, the path index 2, and the path performance metrics 2.

For the identification information of the target object, refer to the foregoing related descriptions. Details are not described herein again.

In an example, the gateway 2 may detect the performance of the path 2 to obtain the path performance metrics 2 indicating the performance of the path 2. A specific implementation in which the gateway 2 detects the performance of the path 2 is not specifically limited in this embodiment of this application. In an example, the gateway 2 may detect the performance of the path 2 by using a data packet or a protocol packet.

In this embodiment of this application, similar to the path performance metrics 1, the path performance metrics 2 may include at least one metrics indicating the performance of the path 2. Delay, packet loss rate, jitter, bandwidth, path status, and QoE can all reflect the performance of the path 1. Therefore, in an example, the path performance metrics 2 may include one or more of delay, packet loss rate, jitter, bandwidth, path status, and QoE.

The path index 2 is used to identify the path 2, and the path index 2 may be any information that can identify the path 2. In an example, the path index 2 may be a path number of the path 2. For example, a plurality of paths for the gateway 2 to access the target object may be numbered in sequence, and each path corresponds to one path number. In another example, the path index 2 may be an MPLS label allocated by the gateway 2 to the path 2. In another example, the path index 2 may be an SRv6 SID allocated by the gateway 2 to the path 2.

When the path index 2 is an SRv6 SID, a node function associated with the SRv6 SID is that a node performs SRv6 decapsulation, and forwards a packet to the target object through an outbound interface corresponding to the SRv6 SID. In an example, when the target object is an SaaS application, the node function associated with the SRv6 SID is End.DT2SaaSPath, and End.DT2SaaSPath indicates that the node performs SRv6 decapsulation, and forwards the packet to a target SaaS application based on the outbound interface corresponding to the SRv6 SID.

In an example, the route 2 may include indication information 2, and the indication information 2 indicates a type of a path index 2 carried in the route 2. The type of the path index 2 may include the path number, the MPLS label, or the SRv6 SID mentioned above. In this case, the user site egress device 1 may determine, based on the indication information 2, the type of the path label 2 identifying the path 2.

In an example, the route type field of the route 2 may indicate that the route 2 is a path performance route associated with the target object. When the target object is an SaaS application, the path performance route may be an SaaS path performance route; or when the target object is a data center, the path performance route may be a data center path performance route.

In an example, an SD-WAN tunnel may be established between the gateway 2 and the user site egress device 1. In a specific example, the gateway 2 and the user site egress device 1 may enable an SD-WAN address family. In this case, the route 2 may be a route advertised based on the SD-WAN address family. For example, the AFI field indicates an SD-WAN address family. In another specific example, the gateway 2 and the user site egress device 1 may enable an SD-WAN subsequent address family. In this case, the route 2 may be a route advertised based on the SD-WAN subsequent address family. For example, the SAFI field indicates an SD-WAN subsequent address family.

In an example, the gateway 2 may further advertise other information to the user site egress device 1, so that the user site egress device 1 can obtain richer information. In an example, the gateway 2 may advertise, to the user site egress device 1, a site identifier of a site to which the gateway 2 belongs, an application type, and a node identifier of the gateway 2.

The site to which the gateway 2 belongs may be a gateway site of the gateway 2.

The application type may indicate a quality of service requirement of at least one type of traffic supported by the target object. For the application type, refer to the foregoing related descriptions. Details are not described herein again.

The node identifier of the gateway 2 may be, for example, an IP address of the gateway 2 or a global identifier of the gateway 2. In an example, the node identifier of the gateway 2 may be used as identification information of the gateway 2.

In this embodiment of this application, when the gateway 2 advertises the path performance metrics 2 to the user site egress device 1 by advertising the route 2 to the user site egress device 1, the route 2 may include at least one sub-TLV, where the at least one sub-TLV is used to carry several metricss in the path performance metrics 2 and information about the target object. For the at least one sub-TLV, refer to the foregoing descriptions of the sub-TLV 1 to the sub-TLV 8. Details are not described herein again.

When receiving the identification information of the target object, the path index 2, and the path performance metrics 2 that are advertised by the gateway 2, the user site egress device 1 may select, based on the path index metrics 1 and the path index metrics 2, the target path for accessing the target object. In an example, the user site egress device 1 may obtain, based on the path performance metrics 1 and a path performance metrics of a link between the user site egress device 1 and the gateway 1, a path performance metrics 1' for the user site egress device 1 to access the target object through a path 1' including the path 1, and obtain, based on the path performance metrics 2 and a path performance metrics of a link between the user site egress device 1 and the gateway 2, a path performance metrics 2' for the user site egress device 1 to access the target object through a path 2' including the path 2. Further, the user site egress device 1 may select, based on the path performance metrics 1' and the path performance metrics 2', the target path for accessing the target object.

In an example, the user site egress device 1 may select a target path from the path 1' and the path 2' based on the path performance metrics 1' and the path performance metrics 2', for example, select a path with better performance in the path 1' and the path 2' as the target path. The path 1' includes the link between the user site egress device 1 and the gateway 1 and the path 1. The path 2' includes the link between the user site egress device 1 and the gateway 2 and the path 2. The link between the user site egress device 1 and the gateway 1 may be an internet link or an SD-WAN tunnel, and the link between the user site egress device 1 and the gateway 2 may be an internet link or an SD-WAN tunnel.

In another example, the user site egress device 1 may select, based on the path performance metrics 1', the path performance metrics 2', and a path performance metrics of another path for the user site device 1 to access the target object, the target path for accessing the target object, for example, select a path with optimal performance as the target path.

In an example, for example, when the method 100 is applied to the application scenario shown in FIG. 1c, the user site egress device 1 may further receive the identification information of the target object, a path index 3, and a path performance metrics 3 that are advertised by a user site egress device 2, where the path index 3 identifies a path 3 for the user site egress device 2 to access the target object through the internet, and the path performance metrics 3 indicates performance of the path 3. The path 2 may also be understood as a path for the user site egress device 2 to access the target object through a DIA link of the user site egress device 2.

For the user site egress device 2 and the path 3, in an example, if the user site egress device 1 corresponds to the user site egress device 110 shown in FIG. 1c, the user site egress device 2 may correspond to the user site egress device 150 shown in FIG. 1c, and correspondingly, the path 3 may correspond to the path 151 or the path 152 shown in FIG. 1c. In another example, if the user site egress device 1 corresponds to the user site egress device 150 shown in FIG. 1c, the user site egress device 2 may correspond to the user site egress device 110 shown in FIG. 1c, and correspondingly, the path 3 may correspond to the path 111 or the path 112 shown in FIG. 1c.

It can be learned from the foregoing descriptions of FIG. 1c that, in an example, the user site egress device 1 and the user site egress device 2 may be located at a same user site, and user egress devices in the same user site may form a cluster egress device. In an example, the user site egress device 2 may advertise the identification information of the target object, the path index 3, and the path performance metrics 3 to the user site egress device 1 by using a cluster protocol. For example, the user site egress device 2 may send a protocol packet 1 to the user site egress device 1, where the protocol packet 1 includes the identification information of the target object, the path index 3, and the path performance metrics 3. Correspondingly, the user site egress device 1 may receive the protocol packet 1 sent by the user site egress device 2.

In this embodiment of this application, similar to the path performance metrics 1, the path performance metrics 3 may include at least one metrics indicating the performance of the path 3. Delay, packet loss rate, jitter, bandwidth, path status, and QoE can all reflect the performance of the path 1. Therefore, in an example, the path performance metrics 3 may include one or more of delay, packet loss rate, jitter, bandwidth, path status, and QoE.

The path index 3 is used to identify the path 3, and the path index 3 may be any information that can identify the path 3. In an example, the path index 3 may be a path number of the path 3. For example, a plurality of paths for the user site egress device 2 to access the target object may be numbered in sequence, and each path corresponds to one path number. In another example, the path index 3 may be an MPLS label allocated by the user site egress device 2 to the path 3. In another example, the path index 3 may be an SRv6 SID allocated by the user site egress device 2 to the path 3.

When the path index 3 is an SRv6 SID, a node function associated with the SRv6 SID is that a node performs SRv6 decapsulation, and forwards a packet to the target object through an outbound interface corresponding to the SRv6 SID. In an example, when the target object is an SaaS application, a node function associated with the SRv6 SID is SRv6 decapsulation, and sending a packet to a target SaaS application based on an outbound interface corresponding to the SRv6 SID. In a specific implementation, the node function associated with the SRv6 SID is End.DT2SaaSPath, and End.DT2SaaSPath indicates that a node performs SRv6 decapsulation, and forwards the packet to the target SaaS application based on the outbound interface corresponding to the SRv6 SID.

In an example, the protocol packet 1 may include indication information 3, and the indication information 3 indicates a type of the path index 3. The type of the path index 3 may include the path number, the MPLS label, or the SRv6 SID mentioned above. In this case, the user site egress device 1 may determine, based on the indication information 3, the type of the path label 3 identifying the path 3. In an example, the user site egress device 2 may further advertise other information to the user site egress device 1, so that the user site egress device 1 can obtain richer information. In an example, the user site egress 2 may advertise, to the user site egress device 1, a site identifier of a site to which the user site egress device 2 belongs, an application type, and a node identifier of the user site egress device 2.

The site to which the user site egress device 2 belongs may be a user site to which the user site egress device 2 belongs.

The application type may indicate a quality of service requirement of at least one type of traffic supported by the target object. For the application type, refer to the foregoing related descriptions. Details are not described herein again.

The node identifier of the user site egress device 2 may be, for example, an IP address of the user site egress device 2, or may be a global identifier of the user site egress device 2.

In this embodiment of this application, when the user site egress device 2 advertises the path performance metrics 3 to the user site egress device 1 by sending a protocol packet 1 to the user site egress device 1, the protocol packet 1 may include at least one sub-TLV, where the at least one sub-TLV is used to carry several metricss in the path performance metrics 3 and information about the target object. For the at least one sub-TLV, refer to the foregoing descriptions of the sub-TLV 1 to the sub-TLV 8. Details are not described herein again.

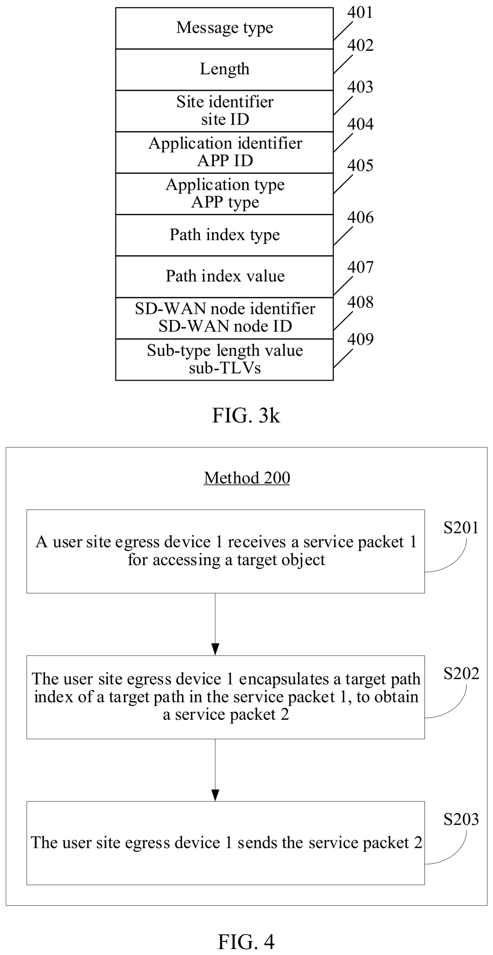

In a specific example, a structure of the protocol packet 1 may be shown in FIG. 3k. FIG. 3k is a diagram of a structure of a protocol packet according to an embodiment of this application. The protocol packet shown in FIG. 3k includes a message type field 401, a length field 402, a site identifier (site ID) field 403, an application identifier (APP ID) field 404, an application type (APP type) field 405, a path index type (path index type) field 406, a path index value (path index value) field 407, an SD-WAN node identifier (SD-WAN node ID) field 408, and a sub-TLVs field 409.

The message type field 401 indicates a packet type of the protocol packet 1. In an example, when the target object is an SaaS application, the packet type is an SaaS path notification (path information, path info).

The site ID field 403 indicates a site identifier of a site to which the user site egress device 2 belongs, for example, a system IP (system IP) of a site.

The SD-WAN node ID field 408 is used to carry an identifier of the user site egress device 2, for example, carry an IP address of the user site egress device 2.

A meaning of the APP ID field 404 is the same as that of the APP ID field 304. Details are not described herein again.

A meaning of the APP type field 405 is the same as that of the APP type field 305. Details are not described herein again.

A meaning of the path index type field 406 is similar to that of the path index type field 306, and a difference lies in that the path index type field 306 is used to carry a type of the path index 1, and the path index type field 406 indicates a type of the path index 3.

A meaning of the path index value field 407 is similar to that of the path index value field 307, and a difference lies in that the path index value field 307 is used to carry the path index 1, and the path index value field 407 is used to carry the path index 3.

A meaning of the sub-TLVs field 409 is the same as that of the sub-TLVs field 309, and may also include one or more of the sub-TLV 1 to the sub-TLV 8.

When the user site egress device 1 receives the identification information of the target object, the path index 3, and the path performance metrics 3 that are advertised by the user site egress 2, the user site egress device 1 may select, based on the path index metrics 1 and the path index metrics 3, the target path for accessing the target object. In an example, the user site egress device 1 may obtain, based on the path performance metrics 1 and a path performance metrics of a link between the user site egress device 1 and the gateway 1, a path performance metrics 1' for the user site egress device 1 to access the target object through a path 1' including the path 1. Further, the user site egress device 1 may select, based on the path performance metrics 1' and the path performance metrics 3, the target path for accessing the target object, for example, select a path with better performance in the path 1' and the path 3 as the target path. For the path 1', refer to the foregoing related descriptions. Details are not described herein again.

In an example, the gateway 1 may access the target object through a plurality of paths. For example, in addition to accessing the target object through the path 1, the gateway 1 may further access the target object through a path 4. It may be understood with reference to FIG. 1a that the gateway 120 may access the target object through the path 121 (corresponding to the path 1) and the path 122 (corresponding to the path 4). In this scenario, the gateway 1 may obtain a path performance metrics 4 of the path 4, and advertise the identification information of the target object, a path index 4, and a path performance metrics 4 to the user site egress device 1. Correspondingly, the user site egress device 1 may receive the identification information of the target object, the path index 4, and the path performance metrics 4 that are advertised by the gateway 1.

In this embodiment of this application, for example, the gateway 1 may advertise the identification information of the target object, the path index 4, and the path performance metrics 4 to the user site egress device 1 by using a protocol packet. In a specific example, the gateway 1 may advertise a route 3 to the user site egress device 1, where the route 3 includes the identification information of the target object, the path index 4, and the path performance metrics 4.

In this embodiment of this application, similar to the path performance metrics 1, the path performance metrics 4 may include at least one metrics indicating the performance of the path 4. Delay, packet loss rate, jitter, bandwidth, path status, and QoE can all reflect the performance of the path 1. Therefore, in an example, the path performance metrics 4 may include one or more of delay, packet loss rate, jitter, bandwidth, path status, and QoE.

The path index 4 is used to identify the path 4, and the path index 4 may be any information that can identify the path 4. In an example, the path index 4 may be a path number of the path 4. In another example, the path index 4 may be an MPLS label allocated by the gateway 1 to the path 4. In another example, the path index 4 may be an SRv6 SID allocated by the gateway 1 to the path 4.

When the path index 4 is an SRv6 SID, a node function associated with the SRv6 SID is that a node performs SRv6 decapsulation, and forwards a packet to the target object through an outbound interface corresponding to the SRv6 SID. In an example, when the target object is an SaaS application, a node function associated with the SRv6 SID is SRv6 decapsulation, and sending a packet to a target SaaS application based on an outbound interface corresponding to the SRv6 SID. In a specific implementation, the node function associated with the SRv6 SID is End.DT2SaaSPath, and End.DT2SaaSPath indicates that a node performs SRv6 decapsulation, and forwards the packet to the target SaaS application based on the outbound interface corresponding to the SRv6 SID.

In an example, the route 3 may include indication information 4, and the indication information 4 indicates a type of a path index 4 carried in the route 3. The type of the path index 4 may include the path number, the MPLS label, or the SRv6 SID mentioned above. In this case, the user site egress device 1 may determine, based on the indication information 4, the type of the path label 4 identifying the path 4.

In an example, the route type field of the route 3 may indicate that the route 3 is a path performance route associated with the target object. When the target object is an SaaS application, the path performance route may be an SaaS path performance route; or when the target object is a data center, the path performance route may be a data center path performance route.

In an example, an SD-WAN tunnel may be established between the gateway 1 and the user site egress device 1. In a specific example, the gateway 1 and the user site egress device 1 may enable an SD-WAN address family. In this case, the route 3 may be a route advertised based on the SD-WAN address family. For example, the AFI field indicates an SD-WAN address family. In another specific example, the gateway 1 and the user site egress device 1 may enable an SD-WAN subsequent address family. In this case, the route 3 may be a route advertised based on the SD-WAN subsequent address family. For example, the SAFI field indicates an SD-WAN subsequent address family.

In an example, the gateway 1 may further advertise other information to the user site egress device 1 through the route 3, so that the user site egress device 1 can obtain richer information. In an example, the gateway 1 may advertise, to the user site egress device 1 through the route 3, a site identifier of a site to which the gateway 1 belongs, an application type, and a node identifier of the gateway 1.

In this embodiment of this application, when the gateway 1 advertises the path performance metrics 4 to the user site egress device 1 by advertising the route 3 to the user site egress device 1, the route 3 may include at least one sub-TLV, where the at least one sub-TLV is used to carry several metricss in the path performance metrics 4 and information about the target object. For the at least one sub-TLV, refer to the foregoing descriptions of the sub-TLV 1 to the sub-TLV 8. Details are not described herein again.

When the user site egress device 1 receives the identification information of the target object, the path index 4, and the path performance metrics 4 that are advertised by the gateway 1, the user site egress device 1 may select, based on the path index metrics 1 and the path index metrics 4, the target path for accessing the target object. In an example, the user site egress device 1 may obtain, based on the path performance metrics 1 and a path performance metrics of a link between the user site egress device 1 and the gateway 1, a path performance metrics 1' for the user site egress device 1 to access the target object through a path 1' including the path 1, and obtain, based on the path performance metrics 4 and the path performance metrics of the link between the user site egress device 1 and the gateway 1, a path performance metrics 2' for the user site egress device 1 to access the target object through a path 4' including the path 4. Further, the user site egress device 1 may select, based on the path performance metrics 1' and the path performance metrics 4', the target path for accessing the target object.

In an example, the user site egress device 1 may select a target path from the path 1' and the path 4' based on the path performance metrics 1' and the path performance metrics 4', for example, select a path with better performance in the path 1' and the path 4' as the target path. The path 4' includes the link between the user site egress device 1 and the gateway 1 and the path 4. For the path 1', refer to the foregoing related descriptions. Details are not described herein again.

In another example, the user site egress device 1 may select, based on the path performance metrics 1', the path performance metrics 4', and a path performance metrics of another path for the user site device 1 to access the target object, the target path for accessing the target object, for example, select a path with optimal performance as the target path.

In an example, in addition to advertising the identification information of the target object, the path index 1, and the path performance metrics 1 to the user site egress device 1, the gateway 1 may further advertise the identification information of the target object, the path index 1, and the path performance metrics 1 to the user site egress device 2, so that the user site egress device 2 selects, based on the path performance metrics 1, the target path for accessing the target object. In a specific example, the gateway 1 may advertise a route 1 to the user site egress device 2, to advertise the identification information of the target object, the path index 1, and the path performance metrics 1 to the user site egress device 2. For the route 1, refer to the foregoing related descriptions. Details are not described herein again.

In another example, in addition to advertising the identification information of the target object, the path index 4, and the path performance metrics 4 to the user site egress device 1, the gateway 1 may further advertise the identification information of the target object, the path index 4, and the path performance metrics 4 to the user site egress device 2, so that the user site egress device 2 selects, based on the path performance metrics 1 and the path performance metrics 4, the target path for accessing the target object. In a specific example, the gateway 1 may advertise a route 3 to the user site egress device 2, to advertise the identification information of the target object, the path index 4, and the path performance metrics 4 to the user site egress device 2. For the route 3, refer to the foregoing related descriptions. Details are not described herein again.

Similarly, in addition to advertising the identification information of the target object, the path index 2, and the path performance metrics 2 to the user site egress device 1, the gateway 2 may further advertise the identification information of the target object, the path index 2, and the path performance metrics 2 to the user site egress device 2, so that the user site egress device 2 selects, based on the path performance metrics 1 and the path performance metrics 2, the target path for accessing the target object. In a specific example, the gateway 2 may advertise a route 2 to the user site egress device 2, to advertise the identification information of the target object, the path index 2, and the path performance metrics 2 to the user site egress device 2. For the route 2, refer to the foregoing related descriptions. Details are not described herein again.

In addition, the user site egress device 1 may also advertise an identifier of the target object, a path index 5, and a path performance metrics 5 to the user site egress device 2, so that the user site egress device 2 selects, based on the path performance metrics 1 and the path performance metrics 5, the target path for accessing the target object. In a specific example, the user site egress device 1 may send a protocol packet 2 to the user site egress device 2, to advertise the identification information of the target object, the path index 5, and the path performance metrics 5 to the user site egress device 2. The path index 5 is used to identify a path 5 for the user site egress device 1 to access the target object through the internet, and the path performance metrics 5 indicates performance of the path 5. For the path index 5, refer to the foregoing descriptions of the path index 3. For the path performance metrics 5, refer to the foregoing related descriptions of the path performance metrics 3. For the protocol packet 2, refer to the foregoing descriptions of the protocol packet 1. Details are not described herein.

In addition, the user site egress device 1 and the user site egress device 2 may further advertise, to each other, performance of a path between the user site egress device 1 and the gateway site and performance of a path between the user site egress device 2 and the gateway site. For example, the user site egress device 1 and the user site egress device 2 may advertise, to each other, performance of a path between the user site egress device 1 and the gateway 1 and performance of a path between the user site egress device 2 and the gateway 1. For another example, the user site egress device 1 and the user site egress device 2 may advertise, to each other, performance of a path between the user site egress device 1 and the gateway 2 and performance of a path between the user site egress device 2 and the gateway 2.

The following describes, with reference to the accompanying drawings, an operation performed by the user site egress device 1 in a traffic forwarding phase. FIG. 4 is a schematic flowchart of a packet forwarding method according to an embodiment of this application. The method 200 shown in FIG. 4 may include S201 to S203 below.

S201: A user site egress device 1 receives a service packet 1 for accessing a target object.

In this embodiment of this application, the service packet 1 may be a packet that is sent by user equipment and that is used to access the target object. The service packet 1 may include a source IP address, a destination IP address, and a payload. The source IP address may be an IP address of the user equipment, and the destination IP address may be an IP address of the target object.

In an example, the user site egress device 1 may receive the service packet 1 sent by the user equipment like a user terminal.

In another example, the user site egress device 1 may receive the service packet 1 sent by a user site device 2. Specifically, the user site egress device 1 may receive a service packet 3 sent by the user site egress device 2, where the service packet 3 includes the service packet 1 and a path index 2.

In a specific example, the service packet 3 may be encapsulated by using GRE. In this case, the service packet 3 includes a GRE header and a payload, the GRE header includes the path index 2, and the payload includes the service packet 1. When the path index 2 is an MPLS label, the service packet 3 may be encapsulated by using an MPLS in GRE protocol, the GRE header of the service packet 3 includes an MPLS label stack, and the MPLS label stack includes the path index 2. When the path index 2 is an SRv6 SID, the service packet 2 is encapsulated by using an SRv6 in GRE protocol, the GRE header of the service packet 3 includes an SRv6 SID list, and the SRv6 SID list includes the path index 2. In this embodiment of this application, a format of the GRE header may be a standard format that meets a GRE header included in the request for comments (request for comments, RFC) 1701.

In another specific example, when the path index 2 is an MPLS label, the service packet 3 may be encapsulated by using MPLS in UDP. In this case, the service packet 3 includes a UDP header, an MPLS label stack, and a payload, the MPLS label stack includes the path index 2, the payload includes the service packet 1, and the MPLS label stack is located between the UDP header and the payload.

In another specific example, when the path index 2 is an SRv6 SID, the service packet 3 may be encapsulated by using an SRv6 in GENEVE protocol. In this case, the service packet 3 includes a GENEVE header and a payload, the GENEVE header includes an SRv6 SID list, the SRv6 SID list includes the path index 2, and the payload includes the service packet 1.

In another specific example, the service packet 3 may include an IP header and a payload, the payload includes the service packet 1, and a path index 2 is included between the IP header and the payload. In this case, the service packet 3 is encapsulated in a simple manner, and is not encapsulated in a form such as GRE or GENEVE. This simplifies an encapsulation form of the service packet 3, and also simplifies performance overheads required for transmitting a service packet between user sites.

S202: The user site egress device 1 encapsulates a target path index of a target path in the service packet 1, to obtain a service packet 2.

In some embodiments, if the user site device 1 receives the service packet 1 from the user equipment, the user site device 1 may encapsulate, in the service packet 1, the target path index of the target path selected by the user site device 1, to obtain the service packet 2, where the service packet 1 may be used as a payload of the service packet 2. The target path index mentioned herein may be an index of a path for a gateway 1 or a gateway 2 to access the target object, for example, may be the foregoing path index 1, path index 2, or path index 4. The target path index mentioned herein may also be an index of a path for the user site egress device 2 to access the target object through the internet, for example, may be the foregoing path index 3.

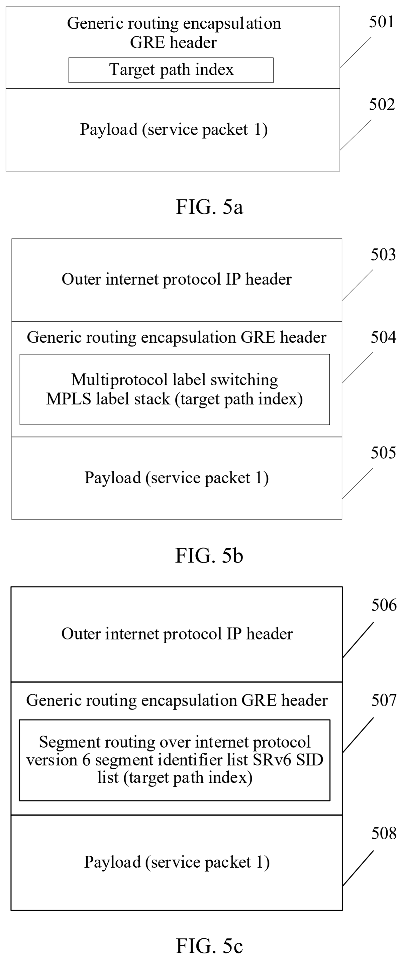

In an example, the service packet 2 may be encapsulated by using GRE. In this case, refer to FIG. 5a for understanding. FIG. 5a is a diagram of a structure of a service packet 2 according to an embodiment of this application. As shown in FIG. 5a, the service packet 2 includes a GRE header 501 and a payload 502, the GRE header 501 includes the target path index, the payload 502 includes the service packet 1, and the service packet 1 includes a source IP address, a destination IP address, and a payload.

In a specific example, when the target path index is an MPLS label, the service packet 2 may be encapsulated by using an MPLS in GRE protocol. Refer to FIG. 5b for understanding. FIG. 5b is a diagram of a structure of another service packet 2 according to an embodiment of this application. As shown in FIG. 5b, the service packet 2 includes an outer IP header 503, a GRE header 504, and a payload 505, the GRE header 504 includes an MPLS label stack, the MPLS label stack includes the target path index, and the payload 505 includes the service packet 1. In an example, the target path index may be a stack bottom label of the MPLS label stack.

In another specific example, when the target path index is an SRv6 SID, the service packet 2 may be encapsulated by using an SRv6 in GRE protocol. Refer to FIG. 5c for understanding. FIG. 5c is a diagram of a structure of another service packet 2 according to an embodiment of this application. As shown in FIG. 5c, the service packet 2 includes an outer IP header 506, a GRE header 507, and a payload 508, the GRE header 507 includes an SRv6 SID list, the SRv6 SID list includes the target path index, and the payload 508 includes the service packet 1. In an example, the target path index may be a last SID in the SRv6 SID list.

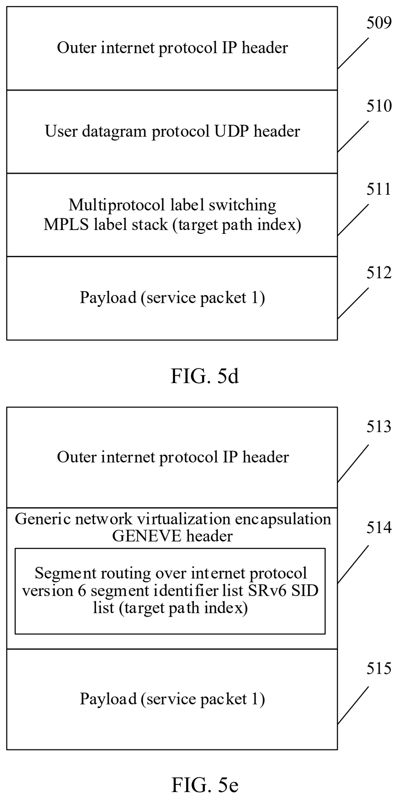

In another example, when the target path index is an MPLS label, the service packet 2 may be encapsulated by using MPLS in UDP. Refer to FIG. 5d for understanding. FIG. 5d is a diagram of a structure of another service packet 2 according to an embodiment of this application. As shown in FIG. 5d, the service packet 2 includes an outer IP header 509, a UDP header 510, an MPLS label stack 511, and a payload 512, the MPLS label stack 511 includes the target path index, the payload 512 includes the service packet 1, and the MPLS label stack 511 is located between the UDP header 510 and the payload 512. In an example, the target path index may be a stack bottom label of the MPLS label stack 511.

In another example, when the target path index is an SRv6 SID, the service packet 2 may be encapsulated by using an SRv6 in GENEVE protocol. Refer to FIG. 5e for understanding. FIG. 5e is a diagram of a structure of another service packet 2 according to an embodiment of this application. As shown in FIG. 5e, the service packet 2 includes an outer IP header 513, a GENEVE header 514, and a payload 515, the GENEVE header 515 includes an SRv6 SID list, the SRv6 SID list includes the target path index, and the payload 515 includes the service packet 1. In a specific example, the target path index may be a last SID in the SRv6 SID list.

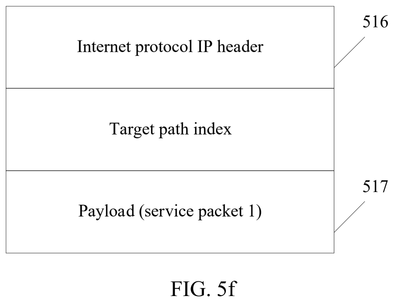

In another example, if the target path index is an index of a path for the user site egress device 2 to access the target object through the internet, the service packet 2 may also be encapsulated in an encapsulation form shown in FIG. 5f, to reduce performance overheads required for transmitting a service packet between user sites. FIG. 5f is a diagram of a structure of another service packet 2 according to an embodiment of this application. As shown in FIG. 5f, the service packet 2 may include an IP header 516 and a payload 517, the payload includes the service packet 1, and a target path index is included between the IP header 516 and the payload 517.

In some other embodiments, if the user site egress device 1 receives a service packet 3 from the user site egress device 2, as described above, the service packet 3 includes a path index 2. In this case, in an example, if a path from the user site egress device 1 to the gateway 2 is reachable, the user site egress device 1 may determine the path index 2 as the target path index, and encapsulate the target path index in the service packet 1, to obtain the service packet 2, so as to access the target object through a path 2 for the gateway 2 to access the target object. In another example, if the user site egress device 1 determines that a path to the gateway 2 is unreachable, the user site egress device 1 may reselect a target path for accessing the target object, and further encapsulate the target path index in the service packet 1, to obtain the service packet 2. For example, the user site egress device 1 chooses to access the target object through the path 1 or the path 4 for the gateway 1 to access the target object, and further encapsulates a path index 1 or a path index 4 in the service packet 1, to obtain the service packet 2.

S203: The user site egress device 1 sends the service packet 2.

In an example, if the target path index is a path index 2, the user site egress device 1 may send the service packet 2 to the gateway 2. Correspondingly, after receiving the service packet 2, the gateway 2 may forward the service packet 1 through a path corresponding to the path index 2, to access the target object through a path 2. In a specific example, the gateway 2 may forward the service packet 1 through an outbound interface corresponding to the path index 2. In another example, if the target path index is a path index 2, and performance of a path between the user site egress device 1 and the gateway 2 is lower than performance of a path between the user site egress device 2 and the gateway 2, the user site egress device 1 may send the service packet 2 to the user site egress device 2, so that the user site egress device 2 forwards the service packet 2.

In an example, if the target path index is a path index 1 or a path index 4, the user site egress device 1 may send the service packet 2 to the gateway 1. Correspondingly, after receiving the service packet 2, the gateway 1 may forward the service packet 1 through a path corresponding to the path index 1 or the path index 4, to access the target object through a path 1 or a path 4. In a specific example, the gateway 1 may forward the service packet 1 through an outbound interface corresponding to the target path index. In another example, if the target path index is a path index 1 or a path index 4, and performance of a path between the user site egress device 1 and the gateway 1 is lower than performance of a path between the user site egress device 2 and the gateway 1, the user site egress device 1 may send the service packet 2 to the user site egress device 2, so that the user site egress device 2 forwards the service packet 2.

In another example, if the target path index is an index of a path for the user site egress device 2 to access the target object through the internet, for example, is the foregoing path index 3, the user site egress device 1 may send the service packet 2 to the user site egress device 2. Correspondingly, the user site egress device 2 may forward the service packet 1 through a path corresponding to the target path index (for example, a target path index 3).

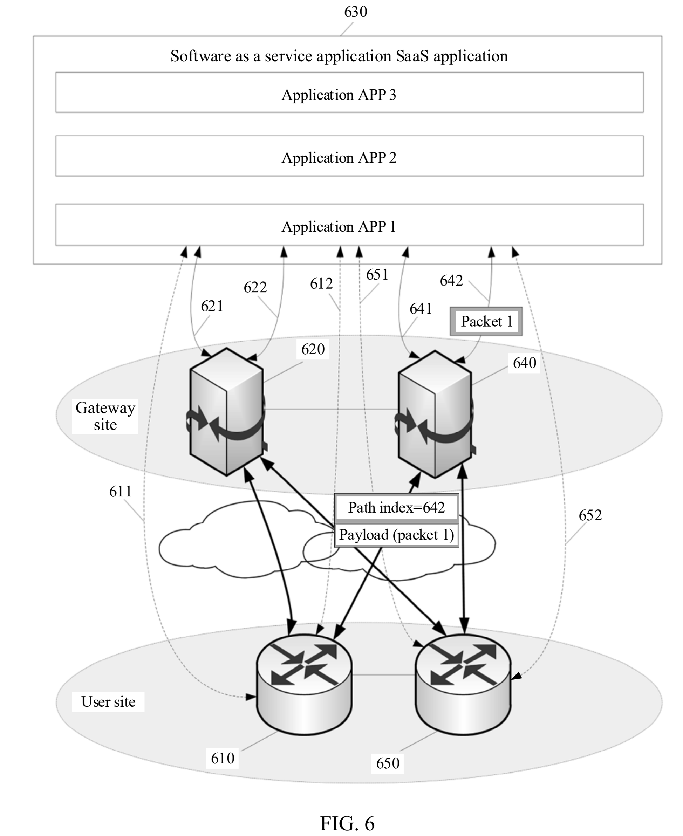

The foregoing describes the routing method and the information advertisement method provided in embodiments of this application. With reference to an application scenario shown in FIG. 6, the following describes, by using an example in which a target object is an SaaS application, a routing method and an information advertisement method provided in embodiments of this application.

FIG. 6 is a diagram of an example application scenario according to an embodiment of this application. As shown in FIG. 6, an SaaS application 630 includes an application (application, APP) 1, an APP 2, and an APP 3. In FIG. 6, a user site includes user site egress devices 610 and 650, and a gateway site includes gateways 620 and 640.

The user site egress device 610 may access the APP 1 through a DIA link 611 or 612 connected to the user site egress device 610; the gateway 620 may access the APP 1 through a path 621 or 622; the gateway 640 may access the APP 1 through a path 641 and a path 642; and the user site egress device 650 may access the APP 1 through a DIA link 651 or 652 connected to the user site egress device 650.

In addition, although not shown in FIG. 6, the user site egress device 610 may access the APP 2 through a DIA link 613 connected to the user site egress device 610, and access the APP 3 through a DIA link 614 connected to the user site egress device 610; the gateway 620 may access the APP 2 through a path 623 and access the APP 3 through a path 624; and the gateway 640 may access the APP 2 through a path 643 and access the APP 3 through a path 644.

The gateway 620 may advertise identification information of the APP 1, a path index of the path 621, and a path performance metrics of the path 621 to the user site egress devices 610 and 650.

The gateway 620 may advertise the identification information of the APP 1, a path index of the path 622, and a path performance metrics of the path 622 to the user site egress devices 610 and 650.

The gateway 620 may advertise identification information of the APP 2, a path index of the path 623, and a path performance metrics of the path 623 to the user site egress devices 610 and 650.

The gateway 620 may advertise identification information of the APP 3, a path index of the path 624, and a path performance metrics of the path 624 to the user site egress devices 610 and 650.

The gateway 640 may advertise identification information of the APP 1, a path index of the path 641, and a path performance metrics of the path 641 to the user site egress devices 610 and 650.

The gateway 640 may advertise the identification information of the APP 1, a path index of the path 642, and a path performance metrics of the path 642 to the user site egress devices 610 and 650.

The gateway 640 may advertise identification information of the APP 2, a path index of the path 643, and a path performance metrics of the path 643 to the user site egress devices 610 and 650.

The gateway 640 may advertise identification information of the APP 3, a path index of the path 644, and a path performance metrics of the path 644 to the user site egress devices 610 and 650.

After receiving the information advertised by the gateway 620 and the gateway 640, the user site egress device 610 may store information shown in Table 1.

**Table 1**

| Name | ID | Path index | Path outbound interface/Re mote IP | Original QoE | Path status | Packet loss rate | Delay | Jitter | Bandwidth | Final QoE |
|---|---|---|---|---|---|---|---|---|---|---|
| APP 1 | 10 | 611 | GE 0/0/1.1 | 75 | Good | 1 | 150 | 40 | B01 | 75 |
| APP 1 | 10 | 612 | GE 0/0/1.1 | 80 | Good | 1 | 160 | 40 | B01 | 80 |
| APP 1 | 10 | 621 | IP address of the gateway 620 | 85 | Good | 0 | 100 | 40 | B11 | 83 |
| APP 1 | 10 | 622 | IP address of the gateway 620 | 85 | Good | 0 | 100 | 40 | B12 | 81 |
| APP 1 | 10 | 641 | IP address of the gateway 640 | 90 | Best | 0 | 80 | 20 | B13 | 82 |
| APP 1 | 10 | 642 | IP address of the gateway 640 | 90 | Best | 0 | 80 | 20 | B14 | 88 |
| APP 2 | 20 | 613 | GE 0/0/1.1 | 40 | Issue | 5 | 180 | 101 | B02 | 40 |
| APP 2 | 20 | 623 | IP address of the gateway 620 | 80 | Good | 1 | 100 | 70 | B21 | 75 |
| APP 2 | 20 | 643 | IP address of the gateway 640 | 60 | Acceptable | 3 | 160 | 80 | B22 | 55 |
| APP3 | 30 | 614 | GE 0/0/1.1 | 90 | Best | 0 | 58 | 20 | B03 | 90 |
| APP 3 | 30 | 624 | IP address of the gateway 620 | 80 | Good | 0 | 65 | 30 | B31 | 78 |
| APP 3 | 30 | 644 | IP address of the gateway 640 | 75 | Acceptable | 2 | 130 | 90 | B32 | 72 |

In Table 1:
The path outbound interface may be an outbound interface connected to a DIA link, and the remote IP may be an IP address of a gateway.

When a path corresponding to the path index is a locally connected DIA link, the original QoE and the final QoE have a same value. When a path corresponding to the path index is a path for the gateway to access an SaaS application, the final QoE may be obtained based on the original QoE and performance of a link between the user site egress device 610 and the gateway.

In an example, when the user site egress device 610 receives a packet 1 for accessing the APP 1, according to Table 1, the user site egress device 1 selects a path whose path index is 642 to access the APP 1, because final QoE of the path is the highest in the six paths for accessing the APP 1 shown in Table 1. In a specific example, the user site egress device 1 may encapsulate the path index 642 in the packet 1, to obtain a packet 2, and send the packet 2 to the gateway 640. After receiving the packet 2, the gateway 640 may forward the packet 1 based on the path index 642 through the path 642.

Similarly, in an example, when the user site egress device 610 receives a packet 3 for accessing the APP 2, according to Table 1, the user site egress device 1 selects a path whose path index is 623 to access the APP 2, because final QoE of the path is the highest in the three paths for accessing the APP 2 shown in Table 1. In a specific example, the user site egress device 1 may encapsulate the path index 623 in the packet 3, to obtain a packet 4, and send the packet 4 to the gateway 620. After receiving the packet 4, the gateway 620 may forward the packet 3 based on the path index 623 through the path 621.

Similarly, in an example, when the user site egress device 610 receives a packet 5 for accessing the APP 3, according to Table 1, the user site egress device 1 selects a path whose path index is 614 to access the APP 3, because final QoE of the path is the highest in the three paths for accessing the APP 3 shown in Table 1. However, the path 614 is a DIA link connected to the user site egress device 1, and therefore, the user site egress device 1 may send the packet 5 through the outbound interface GE 0/0/1.1.

Similarly, the user site egress device 650 may locally store information similar to that shown in Table 1, and when receiving a packet for accessing the SaaS application, select, based on the stored information, a path for accessing the SaaS application (for example, the APP 1, the APP 2, and the APP 3). For a specific implementation in which the user site egress device 650 selects a path for accessing the SaaS application, refer to a specific implementation in which the user site egress device 610 selects a path for accessing the foregoing APP 1, APP 2, and APP 3. Details are not described herein again.

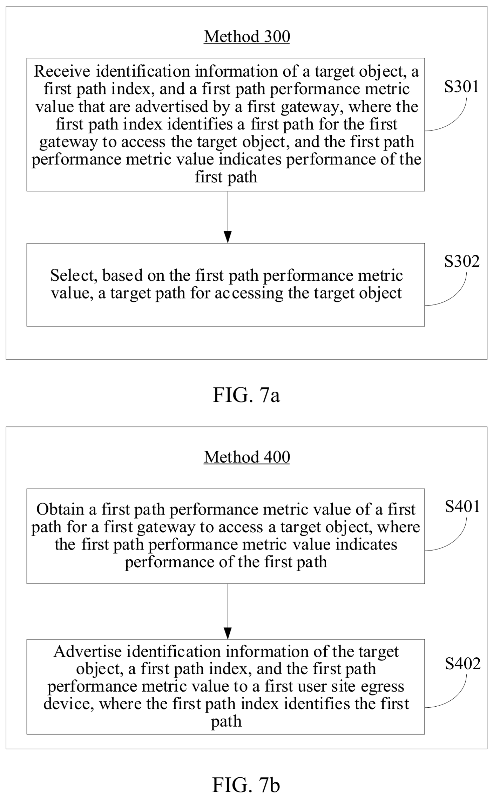

FIG. 7a is a schematic flowchart of a routing method according to an embodiment of this application. The routing method 300 shown in FIG. 7a may be applied to the foregoing method 100 or 200.

The routing method 300 shown in FIG. 7a may be performed by a first site egress device. The first site egress device may correspond to the user site egress device 1 in the method 100 or the method 200.

In a specific example, the method 300 may include S301 and S302.

S301: Receive identification information of a target object, a first path index, and a first path performance metrics that are advertised by a first gateway, where the first path index identifies a first path for the first gateway to access the target object, and the first path performance metrics indicates performance of the first path.

S302: Select, based on the first path performance metrics, a target path for accessing the target object.

The first gateway in the method 300 may correspond to the gateway 1 in the method 100; the first path index in the method 300 may correspond to the path index 1 in the method 100; the first path in the method 300 may correspond to the path 1 in the method 100; and the first path performance metrics in the method 300 may correspond to the path performance metrics 1 in the method 100.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, receiving the identification information of the target object, the first path index, and the first path performance metrics that are advertised by the first gateway includes: receiving a first route advertised by the first gateway, where the first route includes the identification information of the target object, the first path index, and the first path performance metrics.

The first route in the method 300 may correspond to the route 1 in the method 100.

In a possible implementation, the first route further includes indication information, the indication information indicates a type of the first path index carried in the first route, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the method further includes: receiving a site identifier of a site to which the first gateway belongs, an application type, and a node identifier node ID of the first gateway that are advertised by the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

The first sub-TLV in the method 300 may correspond to the sub-TLV 1 in the method 100; the second sub-TLV in the method 300 may correspond to the sub-TLV 2 in the method 100; the third sub-TLV in the method 300 may correspond to the sub-TLV 3 in the method 100; the fourth sub-TLV in the method 300 may correspond to the sub-TLV 4 in the method 100; the fifth sub-TLV in the method 300 may correspond to the sub-TLV 5 in the method 100; the sixth sub-TLV in the method 300 may correspond to the sub-TLV 6 in the method 100; the seventh sub-TLV in the method 300 may correspond to the sub-TLV 7 in the method 100; and the eighth sub-TLV in the method 300 may correspond to the sub-TLV 8 in the method 100.

In a possible implementation, the method further includes: receiving the identification information of the target object, a second path index, and a second path performance metrics that are advertised by a second gateway, where the second path index identifies a second path for the second gateway to access the target object, and the second path performance metrics indicates performance of the second path; and selecting, based on the first path performance metrics, the target path for accessing the target object includes: selecting, based on the first path performance metrics and the second path performance metrics, the target path for accessing the target object.

The second gateway in the method 300 may correspond to the gateway 2 in the method 100; the second path index in the method 300 may correspond to the path index 2 in the method 100; the second path in the method 300 may correspond to the path 2 in the method 100; and the second path performance metrics in the method 300 may correspond to the path performance metrics 2 in the method 100.

In a possible implementation, receiving the identification information of the target object, the second path index, and the second path performance metrics that are advertised by the second gateway includes: receiving a second route advertised by the second gateway, where the second route includes the identification information of the target object, the second path index, and the second path performance metrics.

The second route in the method 300 may correspond to the route 2 in the method 100.

In a possible implementation, the method further includes: receiving the identification information of the target object, a third path index, and a third path performance metrics that are advertised by a second user site egress device, where the third path index identifies a third path for the second user site egress device to access the target object through the internet, and the third path performance metrics indicates performance of the third path; and selecting, based on the first path performance metrics, the target path for accessing the target object includes: selecting, based on the first path performance metrics and the third path performance metrics, the target path for accessing the target object.

The second user site egress device in the method 300 may correspond to the user site egress device 2 in the method 100; the third path index in the method 300 may correspond to the path index 3 in the method 100; the third path performance metrics in the method 300 may correspond to the path performance metrics 3 in the method 100; and the third path in the method 300 may correspond to the path 3 in the method 100.

In a possible implementation, the first user site egress device accesses the first gateway through an SD-WAN tunnel.

In a possible implementation, the method further includes: receiving the identification information of the target object, a fourth path index, and a fourth path performance metrics that are advertised by the first gateway, where the fourth path index identifies a fourth path for the first gateway to access the target object, and the fourth path performance metrics indicates performance of the fourth path; and selecting, based on the first path performance metrics, the target path for accessing the target object includes: selecting, based on the first path performance metrics and the fourth path performance metrics, the target path for accessing the target object.

The fourth path index in the method 300 may correspond to the path index 4 in the method 100; the fourth path performance metrics in the method 300 may correspond to the path performance metrics 4 in the method 100; and the fourth path in the method 300 may correspond to the path 4 in the method 100.

In a possible implementation, receiving the identification information of the target object, the fourth path index, and the fourth path performance metrics that are advertised by the first gateway includes: receiving a third route advertised by the first gateway, where the third route includes the identification information of the target object, the fourth path index, and the fourth path performance metrics.

The third route in the method 300 may correspond to the route 3 in the method 100.

In a possible implementation, the method further includes: receiving a first service packet for accessing the target object; encapsulating a target path index identifying the target path in the first service packet, to obtain a second service packet; and sending the second service packet.

The first service packet in the method 300 may correspond to the service packet 1 in the method 200; and the second service packet in the method 300 may correspond to the service packet 2 in the method 200.

In a possible implementation, the second service packet includes a generic routing encapsulation GRE header, and the GRE header includes the target path index.

In a possible implementation, when the target path index is an MPLS label, the second service packet includes a user datagram protocol UDP header, an MPLS label stack, and a payload, the MPLS label stack includes the target path index, the payload includes the first service packet, and the MPLS label stack is located between the UDP header and the payload.

In a possible implementation, when the target path index is an SRv6 SID, the second service packet includes a generic network virtualization encapsulation GENEVE header, the GENEVE header includes an SRv6 segment list SID list, and the SRv6 SID list includes the target path index.

In a possible implementation, sending the second service packet includes: sending the second service packet to the first gateway through a path established between the first user site egress device and the first gateway; or sending the second service packet to the second user site egress device, to forward the second service packet through the second user site egress device.

In a possible implementation, receiving the first service packet includes:
receiving a third service packet from the second user site egress device, where the third service packet includes the first service packet and the second path index, and the second path index identifies the second path for the second gateway to access the target object; and in response to determining that a path to the second gateway is unreachable, encapsulating the target path index in the first service packet, to obtain the second service packet; or determining the second path index as the target path index, and encapsulating the target path index in the first service packet, to obtain the second service packet.

The third service packet in the method 300 may correspond to the service packet 3 in the method 100.

In a possible implementation, the third service packet includes an IP header and a payload, the second path index is located between the IP header and the payload, and the payload includes the first service packet.

In a possible implementation, the method further includes: storing a correspondence between the identification information of the target object, the first path index, and the first path performance metrics.

FIG. 7b is a schematic flowchart of an information advertisement method according to an embodiment of this application. The information notification method 400 shown in FIG. 7b may be applied to the foregoing method 100 or 200.

The information notification method 400 shown in FIG. 7b may be performed by a first gateway. The first gateway may be corresponding to the gateway 1 in the method 100 or the method 200.

In a specific example, the method 400 may include S401 and S402.

S401: Obtain a first path performance metrics of a first path for the first gateway to access a target object, where the first path performance metrics indicates performance of the first path.

S402: Advertise identification information of the target object, a first path index, and the first path performance metrics to a first user site egress device, where the first path index identifies the first path.

The first path index in the method 400 may correspond to the path index 1 in the method 100; the first path in the method 400 may correspond to the path 1 in the method 100; and the first path performance metrics in the method 400 may correspond to the path performance metrics 1 in the method 100.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, advertising the identification information of the target object, the first path index, and the first path performance metrics to the first user site egress device includes: advertising a first route to the first user site egress device, where the first route includes the identification information of the target object, the first path index, and the first path performance metrics.

The first route in the method 400 may correspond to the route 1 in the method 100.

In a possible implementation, the first route further includes indication information, the indication information indicates a type of the first path index, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the method further includes: advertising, to the first user site egress device, a site identifier of a site to which the first gateway belongs, an application type, and a node identifier node ID of the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

The first sub-TLV in the method 400 may correspond to the sub-TLV 1 in the method 100; the second sub-TLV in the method 400 may correspond to the sub-TLV 2 in the method 100; the third sub-TLV in the method 400 may correspond to the sub-TLV 3 in the method 100; the fourth sub-TLV in the method 400 may correspond to the sub-TLV 4 in the method 100; the fifth sub-TLV in the method 400 may correspond to the sub-TLV 5 in the method 100; the sixth sub-TLV in the method 400 may correspond to the sub-TLV 6 in the method 100; the seventh sub-TLV in the method 400 may correspond to the sub-TLV 7 in the method 100; and the eighth sub-TLV in the method 400 may correspond to the sub-TLV 8 in the method 100.

In a possible implementation, the method further includes: advertising the identification information of the target object, the first path index, and the first path performance metrics to a second user site egress device.

The second user site egress device in the method 400 may correspond to the user site egress device 2 in the method 100.

In a possible implementation, advertising the identification information of the target object, the first path index, and the first path performance metrics to the second user site egress device includes: advertising a second route to the second user site egress device, where the second route includes the identification information of the target object, the first path index, and the first path performance metrics.

The second route in the method 400 may correspond to the route 1 in the method 100.

In a possible implementation, the method further includes: advertising the identification information of the target object, the first path index, and the first path performance metrics to a second gateway.

The second gateway in the method 400 may correspond to the gateway 2 in the method 100.

In a possible implementation, the method further includes: obtaining a second path performance metrics of a second path for the first gateway to access the target object, where the second path performance metrics indicates performance of the second path; and advertising the identification information of the target object, a second path index, and the second path performance metrics to the first user site egress device, where the second path index identifies the second path.

The second path in the method 400 may correspond to the path 4 in the method 100; the second path performance metrics in the method 400 may correspond to the path performance metrics 4 in the method 100; and the second path in the method 400 may correspond to the path 4 in the method 100.

In a possible implementation, advertising the identification information of the target object, the second path index, and the second path performance metrics to the first user site egress device includes: advertising a third route to the first user site egress device, where the third route includes the identification information of the target object, the second path index, and the second path performance metrics.

The third route in the method 400 may correspond to the route 3 in the method 100.

In a possible implementation, the method further includes: receiving an encapsulated first service packet, where the first path index is encapsulated in an outer layer of the first service packet; and forwarding the first service packet based on the first path index through the first path.

The first service packet in the method 400 may correspond to the service packet 2 in the method 200.

In a possible implementation, the encapsulated first service packet includes a generic routing encapsulation GRE header, and the GRE header includes the first path label.

In a possible implementation, when the first path index is an MPLS label, the encapsulated first service packet includes a UDP header, an MPLS label stack, and a payload, the MPLS label stack includes the first path index, the payload carries the first service packet, and the MPLS label stack is located between the UDP header and the payload.

In a possible implementation, when the first path index is an SRv6 SID, the encapsulated first service packet includes a generic network virtualization encapsulation GENEVE header, the GENEVE header includes a segment list SID list, and the SID list includes the first path index.

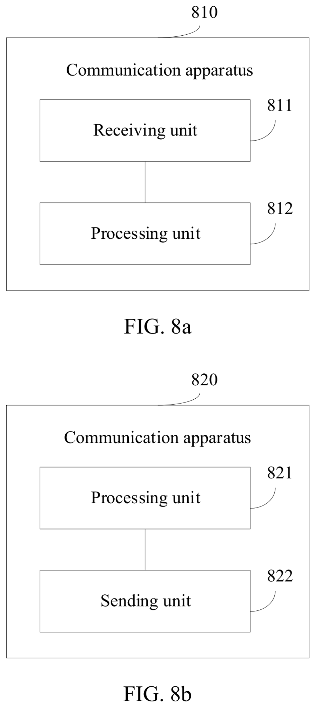

FIG. 8a is a diagram of a structure of a communication apparatus according to an embodiment of this application.

The communication apparatus 810 shown in FIG. 8a includes a receiving unit 811 and a processing unit 812. The receiving unit 811 is configured to perform a receiving operation, and the processing unit 812 is configured to perform an operation other than the receiving operation and a sending operation.

In an example, the communication apparatus 810 may be used in a first user site egress device, and is configured to perform an operation performed by the first user site egress device provided in the foregoing method embodiment. In this case, details are as follows:

The receiving unit 811 is configured to receive identification information of a target object, a first path index, and a first path performance metrics that are advertised by a first gateway, where the first path index identifies a first path for the first gateway to access the target object, and the first path performance metrics indicates performance of the first path.

The processing unit 812 is configured to select, based on the first path performance metrics, a target path for accessing the target object.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, the receiving unit 811 is configured to receive a first route advertised by the first gateway, where the first route includes the identification information of the target object, the first path index, and the first path performance metrics.

In a possible implementation, the first route further includes indication information, the indication information indicates a type of the first path index carried in the first route, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the receiving unit 811 is further configured to receive a site identifier of a site to which the first gateway belongs, an application type, and a node identifier node ID of the first gateway that are advertised by the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

In a possible implementation, the receiving unit 811 is further configured to receive the identification information of the target object, a second path index, and a second path performance metrics that are advertised by a second gateway, where the second path index identifies a second path for the second gateway to access the target object, and the second path performance metrics indicates performance of the second path; and the processing unit 812 is configured to select, based on the first path performance metrics and the second path performance metrics, the target path for accessing the target object.

In a possible implementation, the receiving unit 811 is configured to receive a second route advertised by the second gateway, where the second route includes the identification information of the target object, the second path index, and the second path performance metrics.

In a possible implementation, the receiving unit 811 is further configured to receive the identification information of the target object, a third path index, and a third path performance metrics that are advertised by a second user site egress device, where the third path index identifies a third path for the second user site egress device to access the target object through the internet, and the third path performance metrics indicates performance of the third path; and the processing unit 812 is configured to select, based on the first path performance metrics and the third path performance metrics, the target path for accessing the target object.

In a possible implementation, the first user site egress device accesses the first gateway through an SD-WAN tunnel.

In a possible implementation, the receiving unit 811 is further configured to receive the identification information of the target object, a fourth path index, and a fourth path performance metrics that are advertised by the first gateway, where the fourth path index identifies a fourth path for the first gateway to access the target object, and the fourth path performance metrics indicates performance of the fourth path; and the processing unit 812 is configured to select, based on the first path performance metrics and the fourth path performance metrics, the target path for accessing the target object.

In a possible implementation, the receiving unit 811 is configured to receive a third route advertised by the first gateway, where the third route includes the identification information of the target object, the fourth path index, and the fourth path performance metrics.

In a possible implementation, the receiving unit 811 is further configured to receive a first service packet for accessing the target object; the processing unit 812 is further configured to encapsulate a target path index identifying the target path in the first service packet, to obtain a second service packet; and the apparatus further includes a sending unit, configured to send the second service packet.

In a possible implementation, the second service packet includes a generic routing encapsulation GRE header, and the GRE header includes the target path index.

In a possible implementation, when the target path index is an MPLS label, the second service packet includes a user datagram protocol UDP header, an MPLS label stack, and a payload, the MPLS label stack includes the target path index, the payload includes the first service packet, and the MPLS label stack is located between the UDP header and the payload.

In a possible implementation, when the target path index is an SRv6 SID, the second service packet includes a generic network virtualization encapsulation GENEVE header, the GENEVE header includes an SRv6 segment list SID list, and the SRv6 SID list includes the target path index.

In a possible implementation, the sending unit is configured to: send the second service packet to the first gateway through a path established between the first user site egress device and the first gateway; or send the second service packet to the second user site egress device, to forward the second service packet through the second user site egress device.

In a possible implementation, the receiving unit 811 is configured to receive a third service packet from the second user site egress device, where the third service packet includes the first service packet and the second path index, and the second path index identifies the second path for the second gateway to access the target object; and the processing unit 812 is configured to: in response to determining that a path to the second gateway is unreachable, encapsulate the target path index in the first service packet, to obtain the second service packet; or determine the second path index as the target path index, and encapsulate the target path index in the first service packet, to obtain the second service packet.

In a possible implementation, the third service packet includes an IP header and a payload, the second path index is located between the IP header and the payload, and the payload includes the first service packet.

In a possible implementation, the processing unit 812 is further configured to store a correspondence between the identification information of the target object, the first path index, and the first path performance metrics.

FIG. 8b is a diagram of a structure of a communication apparatus according to an embodiment of this application.

The communication apparatus 820 shown in FIG. 8b includes a processing unit 821 and a sending unit 822. The sending unit 822 is configured to perform a sending operation, and the processing unit 821 is configured to perform an operation other than a receiving operation and the sending operation.

In an example, the communication apparatus 820 may be used in a first gateway, and is configured to perform an operation performed by the first gateway provided in the foregoing method embodiment. In this case, details are as follows:

The processing unit 821 is configured to obtain a first path performance metrics of a first path for the first gateway to access a target object, where the first path performance metrics indicates performance of the first path.

The sending unit 822 is configured to advertise identification information of the target object, a first path index, and the first path performance metrics to a first user site egress device, where the first path index identifies the first path.

In a possible implementation, the target object is a software as a service SaaS application or a data center.

In a possible implementation, the first path index is a path number, a multiprotocol label switching MPLS label, or a segment routing over internet protocol version 6 segment identifier SRv6 SID.

In a possible implementation, when the target object is an SaaS application and the first path index is an SRv6 SID, a node function associated with the SRv6 SID is SRv6 decapsulation, and sending a packet to a target SaaS application based on an outbound interface corresponding to the SRv6 SID. In a specific implementation, the node function associated with the SRv6 SID is END.DT2SaasPath, and END.DT2SaasPath indicates that a node performs SRv6 decapsulation, and sends the packet to the target SaaS application based on the outbound interface corresponding to the SRv6 SID.

In a possible implementation, the sending unit 822 is configured to advertise a first route to the first user site egress device, where the first route includes the identification information of the target object, the first path index, and the first path performance metrics.

In a possible implementation, the first route further includes indication information, the indication information indicates a type of the first path index, and the type is a path number, an MPLS label, or an SRv6 SID.

In a possible implementation, a route type field of the first route indicates that the first route is a path performance route associated with the target object.

In a possible implementation, the first route is a route advertised based on a software-defined wide area network SD-WAN address family or an SD-WAN subsequent address family.

In a possible implementation, the sending unit 822 is further configured to advertise, to the first user site egress device, a site identifier of a site to which the first gateway belongs, an application type, and a node identifier node ID of the first gateway.

In a possible implementation, the first path performance metrics includes one or more of the following: delay, packet loss rate, jitter, bandwidth, path status, and quality of experience QoE.

In a possible implementation, the first route includes one or more of the following: a first sub-type length value sub-TLV, indicating a transmission delay of the first path; a second sub-TLV, indicating a packet loss rate of the first path; a third sub-TLV, indicating a jitter of the first path; a fourth sub-TLV, indicating a bandwidth of the first path; a fifth sub-TLV, indicating a path status of the first path; a sixth sub-TLV, indicating QoE of the first path; a seventh sub-TLV, indicating a name of the target object; and an eighth sub-TLV, indicating a domain name of the target object.

In a possible implementation, the sending unit 822 is further configured to advertise the identification information of the target object, the first path index, and the first path performance metrics to a second user site egress device.

In a possible implementation, the sending unit 822 is configured to advertise a second route to the second user site egress device, where the second route includes the identification information of the target object, the first path index, and the first path performance metrics.

In a possible implementation, the sending unit 822 is further configured to advertise the identification information of the target object, the first path index, and the first path performance metrics to a second gateway.

In a possible implementation, the processing unit 821 is further configured to obtain a second path performance metrics of a second path for the first gateway to access the target object, where the second path performance metrics indicates performance of the second path; and the sending unit 822 is further configured to advertise the identification information of the target object, a second path index, and the second path performance metrics to the first user site egress device, where the second path index identifies the second path.

In a possible implementation, the sending unit 822 is configured to advertise a third route to the first user site egress device, where the third route includes the identification information of the target object, the second path index, and the second path performance metrics.

In a possible implementation, the apparatus further includes a receiving unit, configured to receive an encapsulated first service packet, where the first path index is encapsulated in an outer layer of the first service packet; and the sending unit 822 is further configured to forward the first service packet based on the first path index through the first path.

In a possible implementation, the encapsulated first service packet includes a generic routing encapsulation GRE header, and the GRE header includes the first path label.

In a possible implementation, when the first path index is an MPLS label, the encapsulated first service packet includes a UDP header, an MPLS label stack, and a payload, the MPLS label stack includes the first path index, the payload carries the first service packet, and the MPLS label stack is located between the UDP header and the payload.

In a possible implementation, when the first path index is an SRv6 SID, the encapsulated first service packet includes a generic network virtualization encapsulation GENEVE header, the GENEVE header includes a segment list SID list, and the SID list includes the first path index.

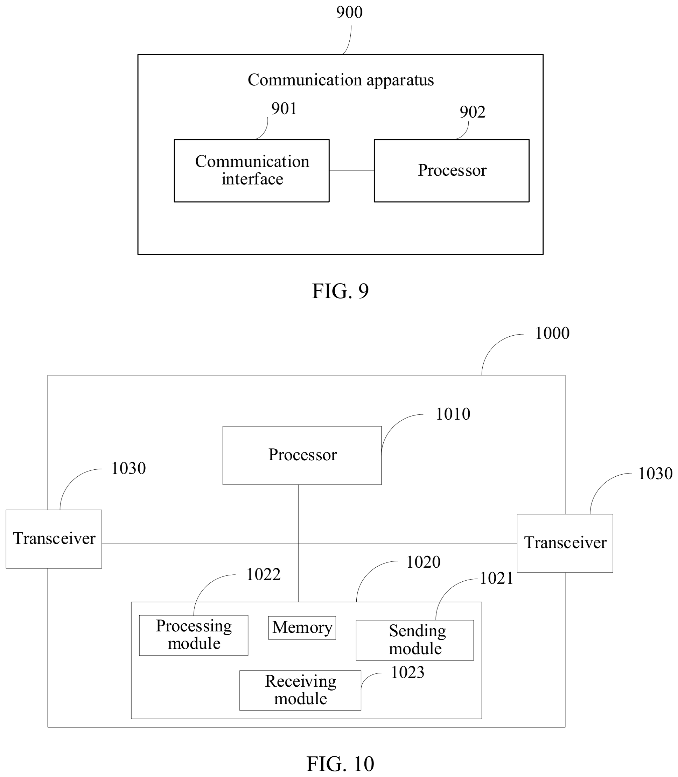

In addition, an embodiment of this application further provides a communication apparatus 900. FIG. 9 is a diagram of a structure of a communication apparatus according to an embodiment of this application. The communication apparatus 900 includes a communication interface 901 and a processor 902 connected to the communication interface 901. The communication apparatus 900 may be configured to perform the method 100, the method 200, the method 300, or the method 400 in the foregoing embodiments.

When the communication apparatus 900 is configured to perform the foregoing method 100:

In an example, the communication apparatus 900 is equivalent to the gateway 1 in the method 100. The communication interface 901 is configured to perform receiving and sending operations performed by the gateway 1 in the method 100. The processor 902 is configured to perform an operation other than the receiving and sending operations performed by the gateway 1 in the method 100. For example, the processor 902 is configured to obtain a path performance metrics 1 of a path 1 for the gateway 1 to access a target object, where the path performance metrics 1 indicates performance of the path 1; and the communication interface 901 is configured to advertise identification information of the target object, a path index 1, and the path performance metrics 1 to a user site egress device 1, where the path index 1 identifies the path 1.

In another example, the communication apparatus 900 is equivalent to the gateway 1 in the method 100. The communication interface 901 is configured to perform receiving and sending operations performed by the user site egress device 1 in the method 100. The processor 902 is configured to perform an operation other than the receiving and sending operations performed by the user site egress device 1 in the method 100. For example, the communication interface 901 is configured to receive identification information of a target object, a path index 1, and a path performance metrics 1 that are advertised by a gateway 1; and the processor 902 is configured to select, based on the path performance metrics 1, a target path for accessing the target object.

When the communication apparatus 900 is configured to perform the foregoing method 200, the communication apparatus 900 is equivalent to the user site egress device 1 in the method 200. The communication interface 901 is configured to perform receiving and sending operations performed by the user site egress device 1 in the method 200. The processor 902 is configured to perform an operation other than the receiving and sending operations performed by the user site egress device 1 in the method 200. For example, the communication interface 901 is configured to receive a service packet 1 for accessing a target object; the processor 902 is configured to encapsulate a target path index of a target path in the service packet 1, to obtain a service packet 2; and the communication interface 901 is further configured to send the service packet 2.

When the communication apparatus 900 is configured to perform the foregoing method 300, the communication apparatus 900 is equivalent to the first user site egress device in the method 300. The communication interface 901 is configured to perform receiving and sending operations performed by the first user site egress device in the method 300. The processor 902 is configured to perform an operation other than the receiving and sending operations performed by the first user site egress device in the method 300. For example, the communication interface 901 is configured to receive identification information of a target object, a first path index, and a first path performance metrics that are advertised by a first gateway, where the first path index identifies a first path for the first gateway to access the target object, and the first path performance metrics indicates performance of the first path; and the processor 902 is configured to select, based on the first path performance metrics, a target path for accessing the target object.

When the communication apparatus 900 is configured to perform the foregoing method 400, the communication apparatus 900 is equivalent to the first gateway in the method 400. The communication interface 901 is configured to perform receiving and sending operations performed by the first gateway in the method 400. The processor 902 is configured to perform an operation other than the receiving and sending operations performed by the first gateway in the method 400. For example, the processor 902 is configured to obtain a first path performance metrics of a first path for the first gateway to access a target object, where the first path performance metrics indicates performance of the first path; and the communication interface 901 is configured to advertise identification information of the target object, a first path index, and the first path performance metrics to a first user site egress device, where the first path index identifies the first path.

In addition, an embodiment of this application further provides a communication apparatus 1000. FIG. 10 is a diagram of a structure of a communication apparatus according to an embodiment of this application. The communication apparatus 1000 may be configured to perform the method 100, the method 200, the method 300, or the method 400 in the foregoing embodiments.

As shown in FIG. 10, the communication apparatus 1000 may include a processor 1010, a memory 1020 connected to the processor 1010 in a coupling manner, and a transceiver 1030. The transceiver 1030 may be, for example, a communication interface or an optical module. The processor 1010 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 1010 may be one processor, or may include a plurality of processors. The memory 1020 may include a volatile memory (English: volatile memory), for example, a random access memory (English: random access memory, RAM for short); or the memory may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 1020 may include a combination of the foregoing types of memories. The memory 1020 may be one memory, or may include a plurality of memories. In an implementation, the memory 1020 stores computer-readable instructions, and the computer-readable instructions include a plurality of software modules, for example, a sending module 1021, a processing module 1022, and a receiving module 1023. After executing each software module, the processor 1010 may perform a corresponding operation based on an indication of each software module. In this embodiment, an operation performed by a software module is actually the operation performed by the processor 1010 based on the indication of the software module.

When the communication apparatus 1000 is configured to perform the foregoing method 100:

In an example, the communication apparatus 1000 is equivalent to the gateway 1 in the method 100. The transceiver 1030 is configured to perform receiving and sending operations performed by the gateway 1 in the method 100. The processor 1010 is configured to perform an operation other than the receiving and sending operations performed by the gateway 1 in the method 100. For example, the processor 1010 is configured to obtain a path performance metrics 1 of a path 1 for the gateway 1 to access a target object, where the path performance metrics 1 indicates performance of the path 1; and the transceiver 1030 is configured to advertise identification information of the target object, a path index 1, and the path performance metrics 1 to a user site egress device 1, where the path index 1 identifies the path 1.

In another example, the communication apparatus 1000 is equivalent to the gateway 1 in the method 100. The transceiver 1030 is configured to perform receiving and sending operations performed by the user site egress device 1 in the method 100. The processor 1010 is configured to perform an operation other than the receiving and sending operations performed by the user site egress device 1 in the method 100. For example, the transceiver 1030 is configured to receive identification information of a target object, a path index 1, and a path performance metrics 1 that are advertised by a gateway 1; and the processor 1010 is configured to select, based on the path performance metrics 1, a target path for accessing the target object.

When the communication apparatus 1000 is configured to perform the foregoing method 200, the communication apparatus 1000 is equivalent to the user site egress device 1 in the method 200. The transceiver 1030 is configured to perform receiving and sending operations performed by the user site egress device 1 in the method 200. The processor 1010 is configured to perform an operation other than the receiving and sending operations performed by the user site egress device 1 in the method 200. For example, the transceiver 1030 is configured to receive a service packet 1 for accessing a target object; the processor 1010 is configured to encapsulate a target path index of a target path in the service packet 1, to obtain a service packet 2; and the transceiver 1030 is further configured to send the service packet 2.

When the communication apparatus 1000 is configured to perform the foregoing method 300, the communication apparatus 1000 is equivalent to the first user site egress device in the method 300. The transceiver 1030 is configured to perform receiving and sending operations performed by the first user site egress device in the method 300. The processor 1010 is configured to perform an operation other than the receiving and sending operations performed by the first user site egress device in the method 300. For example, the transceiver 1030 is configured to receive identification information of a target object, a first path index, and a first path performance metrics that are advertised by a first gateway, where the first path index identifies a first path for the first gateway to access the target object, and the first path performance metrics indicates performance of the first path; and the processor 1010 is configured to select, based on the first path performance metrics, a target path for accessing the target object.

When the communication apparatus 1000 is configured to perform the foregoing method 400, the communication apparatus 1000 is equivalent to the first gateway in the method 400. The transceiver 1030 is configured to perform receiving and sending operations performed by the first gateway in the method 400. The processor 1010 is configured to perform an operation other than the receiving and sending operations performed by the first gateway in the method 400. For example, the processor 1010 is configured to obtain a first path performance metrics of a first path for the first gateway to access a target object, where the first path performance metrics indicates performance of the first path; and the transceiver 1030 is configured to advertise identification information of the target object, a first path index, and the first path performance metrics to a first user site egress device, where the first path index identifies the first path.

This application further provides a computer-readable storage medium. The computer-readable storage medium stores instructions or a computer program. When the instructions or the computer program is run on a processor, any one or more operations in the method (for example, the method 100, the method 200, the method 300, or the method 400) in the foregoing embodiments can be implemented.

This application further provides a computer program product, including a computer program. When the computer program is run on a processor, any one or more operations in the method (for example, the method 100, the method 200, the method 300, or the method 400) in the foregoing embodiments can be implemented.

An embodiment of this application further provides a communication system, configured to perform the routing method and/or the information advertisement method provided in the foregoing method embodiments. In an example, the communication system includes the gateway 1 and the user site egress device 1 in the method 100. In another example, the communication system includes a first user site egress device that performs the foregoing method 300 and a first gateway that performs the foregoing method 400.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments of the present invention described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are intended merely to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A routing method, applied to a first user site egress device, wherein the method comprises:
receiving identification information of a target object, a first path index, and a first path performance metrics that are advertised by a first gateway, wherein the first path index identifies a first path for the first gateway to access the target object, and the first path performance metrics indicates performance of the first path; and
selecting, based on the first path performance metrics, a target path for accessing the target object.

2. The method according to claim 1, wherein the target object is a software as a service SaaS application or a data center.

3. The method according to claim 1 or 2, wherein the first path index is:
a path number, a multiprotocol label switching MPLS label, or a segment routing over internet protocol version 6 segment identifier SRv6 SID.

4. The method according to claim 3, wherein when the target object is an SaaS application and the first path index is an SRv6 SID, a node function associated with the SRv6 SID is that a node performs SRv6 decapsulation, and sends a packet to a target SaaS application based on an outbound interface corresponding to the SRv6 SID.

5. The method according to any one of claims 1 to 4, wherein receiving the identification information of the target object, the first path index, and the first path performance metrics that are advertised by the first gateway comprises:
receiving a first route advertised by the first gateway, wherein the first route comprises the identification information of the target object, the first path index, and the first path performance metrics.

6. The method according to claim 5, wherein the first route further comprises indication information, the indication information indicates a type of the first path index carried in the first route, and the type is a path number, an MPLS label, or an SRv6 SID.

7. The method according to claim 5 or 6, wherein a route type field of the first route indicates that the first route is a path performance route associated with the target object.

8. The method according to any one of claims 5 to 7, wherein the first route is a route advertised based on a software-defined wide area network SD-WAN address family or an SD-WAN subsequent address family.

9. The method according to any one of claims 1 to 8, wherein the method further comprises:
receiving a site identifier of a site to which the first gateway belongs, an application type, and a node identifier node ID of the first gateway that are advertised by the first gateway.

10. The method according to any one of claims 1 to 9, wherein the first path performance metrics comprises one or more of the following:
delay, packet loss rate, jitter, bandwidth, path status, and quality of experience QoE.

11. The method according to any one of claims 5 to 8, wherein the first route comprises one or more of the following:
a first sub-type length value sub-TLV, indicating a transmission delay of the first path;
a second sub-TLV, indicating a packet loss rate of the first path;
a third sub-TLV, indicating a jitter of the first path;
a fourth sub-TLV, indicating a bandwidth of the first path;
a fifth sub-TLV, indicating a path status of the first path;
a sixth sub-TLV, indicating QoE of the first path;
a seventh sub-TLV, indicating a name of the target object; and
an eighth sub-TLV, indicating a domain name of the target object.

12. The method according to any one of claims 1 to 11, wherein the method further comprises:
receiving the identification information of the target object, a second path index, and a second path performance metrics that are advertised by a second gateway, wherein the second path index identifies a second path for the second gateway to access the target object, and the second path performance metrics indicates performance of the second path; and
selecting, based on the first path performance metrics, the target path for accessing the target object comprises:
selecting, based on the first path performance metrics and the second path performance metrics, the target path for accessing the target object.

13. The method according to claim 12, wherein receiving the identification information of the target object, the second path index, and the second path performance metrics that are advertised by the second gateway comprises:
receiving a second route advertised by the second gateway, wherein the second route comprises the identification information of the target object, the second path index, and the second path performance metrics.

14. The method according to any one of claims 1 to 13, wherein the method further comprises:
receiving the identification information of the target object, a third path index, and a third path performance metrics that are advertised by a second user site egress device, wherein the third path index identifies a third path for the second user site egress device to access the target object through the internet, and the third path performance metrics indicates performance of the third path; and
selecting, based on the first path performance metrics, the target path for accessing the target object comprises:
selecting, based on the first path performance metrics and the third path performance metrics, the target path for accessing the target object.

15. The method according to any one of claims 1 to 14, wherein the first user site egress device accesses the first gateway through an SD-WAN tunnel.

16. The method according to any one of claims 1 to 15, wherein the method further comprises:
receiving the identification information of the target object, a fourth path index, and a fourth path performance metrics that are advertised by the first gateway, wherein the fourth path index identifies a fourth path for the first gateway to access the target object, and the fourth path performance metrics indicates performance of the fourth path; and
selecting, based on the first path performance metrics, the target path for accessing the target object comprises:
selecting, based on the first path performance metrics and the fourth path performance metrics, the target path for accessing the target object.

17. The method according to claim 16, wherein receiving the identification information of the target object, the fourth path index, and the fourth path performance metrics that are advertised by the first gateway comprises:
receiving a third route advertised by the first gateway, wherein the third route comprises the identification information of the target object, the fourth path index, and the fourth path performance metrics.

18. The method according to any one of claims 1 to 17, wherein the method further comprises:
receiving a first service packet for accessing the target object;
encapsulating a target path index identifying the target path in the first service packet, to obtain a second service packet; and
sending the second service packet.

19. The method according to claim 18, wherein the second service packet comprises a generic routing encapsulation GRE header, and the GRE header comprises the target path index.

20. The method according to claim 18, wherein when the target path index is an MPLS label, the second service packet comprises a user datagram protocol UDP header, an MPLS label stack, and a payload, the MPLS label stack comprises the target path index, the payload comprises the first service packet, and the MPLS label stack is located between the UDP header and the payload.

21. The method according to claim 18, wherein when the target path index is an SRv6 SID, the second service packet comprises a generic network virtualization encapsulation GENEVE header, the GENEVE header comprises an SRv6 segment list SID list, and the SRv6 SID list comprises the target path index.

22. The method according to any one of claims 18 to 21, wherein sending the second service packet comprises:
sending the second service packet to the first gateway through a path established between the first user site egress device and the first gateway; or
sending the second service packet to the second user site egress device, to forward the second service packet through the second user site egress device.

23. The method according to any one of claims 18 to 21, wherein receiving the first service packet comprises:
receiving a third service packet from the second user site egress device, wherein the third service packet comprises the first service packet and the second path index, and the second path index identifies the second path for the second gateway to access the target object; and
encapsulating the target path index identifying the target path in the first service packet, to obtain the second service packet comprises:
in response to determining that a path to the second gateway is unreachable, encapsulating the target path index in the first service packet, to obtain the second service packet; or determining the second path index as the target path index, and encapsulating the target path index in the first service packet, to obtain the second service packet.

24. The method according to claim 23, wherein the third service packet comprises an IP header and a payload, the second path index is located between the IP header and the payload, and the payload comprises the first service packet.

25. The method according to any one of claims 1 to 24, wherein the method further comprises:
storing a correspondence between the identification information of the target object, the first path index, and the first path performance metrics.

26. An information advertisement method, applied to a first gateway, wherein the method comprises:
obtaining a first path performance metrics of a first path for the first gateway to access a target object, wherein the first path performance metrics indicates performance of the first path; and
advertising identification information of the target object, a first path index, and the first path performance metrics to a first user site egress device, wherein the first path index identifies the first path.

27. The method according to claim 26, wherein the target object is a software as a service SaaS application or a data center.

28. The method according to claim 26 or 27, wherein the first path index is:
a path number, a multiprotocol label switching MPLS label, or a segment routing over internet protocol version 6 segment identifier SRv6 SID.

29. The method according to claim 28, wherein when the target object is an SaaS application and the first path index is an SRv6 SID, a node function associated with the SRv6 SID is that a node performs SRv6 decapsulation, and sends a packet to a target SaaS application based on an outbound interface corresponding to the SRv6 SID.

30. The method according to any one of claims 26 to 29, wherein advertising the identification information of the target object, the first path index, and the first path performance metrics to the first user site egress device comprises:
advertising a first route to the first user site egress device, wherein the first route comprises the identification information of the target object, the first path index, and the first path performance metrics.

31. The method according to claim 30, wherein the first route further comprises indication information, the indication information indicates a type of the first path index, and the type is a path number, an MPLS label, or an SRv6 SID.

32. The method according to claim 30 or 31, wherein a route type field of the first route indicates that the first route is a path performance route associated with the target object.

33. The method according to any one of claims 30 to 32, wherein the first route is a route advertised based on a software-defined wide area network SD-WAN address family or an SD-WAN subsequent address family.

34. The method according to any one of claims 26 to 33, wherein the method further comprises:
advertising, to the first user site egress device, a site identifier of a site to which the first gateway belongs, an application type, and a node identifier node ID of the first gateway.

35. The method according to any one of claims 26 to 34, wherein the first path performance metrics comprises one or more of the following:
delay, packet loss rate, jitter, bandwidth, path status, and quality of experience QoE.

36. The method according to any one of claims 30 to 33, wherein the first route comprises one or more of the following:
a first sub-type length value sub-TLV, indicating a transmission delay of the first path;
a second sub-TLV, indicating a packet loss rate of the first path;
a third sub-TLV, indicating a jitter of the first path;
a fourth sub-TLV, indicating a bandwidth of the first path;
a fifth sub-TLV, indicating a path status of the first path;
a sixth sub-TLV, indicating QoE of the first path;
a seventh sub-TLV, indicating a name of the target object; and
an eighth sub-TLV, indicating a domain name of the target object.

37. The method according to any one of claims 26 to 36, wherein the method further comprises:
advertising the identification information of the target object, the first path index, and the first path performance metrics to a second user site egress device.

38. The method according to claim 37, wherein the advertising the identification information of the target object, the first path index, and the first path performance metrics to the second user site egress device comprises:
advertising a second route to the second user site egress device, wherein the second route comprises the identification information of the target object, the first path index, and the first path performance metrics.

39. The method according to any one of claims 26 to 38, wherein the method further comprises:
advertising the identification information of the target object, the first path index, and the first path performance metrics to a second gateway.

40. The method according to any one of claims 26 to 39, wherein the method further comprises:
obtaining a second path performance metrics of a second path for the first gateway to access the target object, wherein the second path performance metrics indicates performance of the second path; and
advertising the identification information of the target object, a second path index, and the second path performance metrics to the first user site egress device, wherein the second path index identifies the second path.

41. The method according to claim 40, wherein advertising the identification information of the target object, the second path index, and the second path performance metrics to the first user site egress device comprises:
advertising a third route to the first user site egress device, wherein the third route comprises the identification information of the target object, the second path index, and the second path performance metrics.

42. The method according to claims 26 to 41, wherein the method further comprises:
receiving an encapsulated first service packet, wherein the first path index is encapsulated in an outer layer of the first service packet; and
forwarding the first service packet based on the first path index through the first path.

43. The method according to claim 42, wherein the encapsulated first service packet comprises a generic routing encapsulation GRE header, and the GRE header comprises the first path label.

44. The method according to claim 42, wherein when the first path index is an MPLS label, the encapsulated first service packet comprises a UDP header, an MPLS label stack, and a payload, the MPLS label stack comprises the first path index, the payload carries the first service packet, and the MPLS label stack is located between the UDP header and the payload.

45. The method according to claim 42, wherein when the first path index is an SRv6 SID, the encapsulated first service packet comprises a generic network virtualization encapsulation GENEVE header, the GENEVE header comprises a segment list SID list, and the SID list comprises the first path index.

46. A communication apparatus, used in a first user site egress device, wherein the apparatus comprises:
a transceiver unit, configured to receive identification information of a target object, a first path index, and a first path performance metrics that are advertised by a first gateway, wherein the first path index identifies a first path for the first gateway to access the target object, and the first path performance metrics indicates performance of the first path; and
a processing unit, configured to select, based on the first path performance metrics, a target path for accessing the target object.

47. The apparatus according to claim 46, wherein the target object is a software as a service SaaS application or a data center.

48. The apparatus according to claim 46 or 47, wherein the first path index is:
a path number, a multiprotocol label switching MPLS label, or a segment routing over internet protocol version 6 segment identifier SRv6 SID.

49. The apparatus according to claim 48, wherein when the target object is an SaaS application and the first path index is an SRv6 SID, a node function associated with the SRv6 SID is that a node performs SRv6 decapsulation, and sends a packet to a target SaaS application based on an outbound interface corresponding to the SRv6 SID.

50. The apparatus according to any one of claims 46 to 49, wherein the transceiver unit is configured to:
receive a first route advertised by the first gateway, wherein the first route comprises the identification information of the target object, the first path index, and the first path performance metrics.

51. The apparatus according to claim 50, wherein the first route further comprises indication information, the indication information indicates a type of the first path index carried in the first route, and the type is a path number, an MPLS label, or an SRv6 SID.

52. The apparatus according to claim 50 or 51, wherein a route type field of the first route indicates that the first route is a path performance route associated with the target object.

53. The apparatus according to any one of claims 50 to 52, wherein the first route is a route advertised based on a software-defined wide area network SD-WAN address family or an SD-WAN subsequent address family.

54. The apparatus according to any one of claims 46 to 53, wherein the transceiver unit is further configured to:
receive a site identifier of a site to which the first gateway belongs, an application type, and a node identifier node ID of the first gateway that are advertised by the first gateway.

55. The apparatus according to any one of claims 46 to 54, wherein the first path performance metrics comprises one or more of the following:
delay, packet loss rate, jitter, bandwidth, path status, and quality of experience QoE.

56. The apparatus according to any one of claims 50 to 53, wherein the first route comprises one or more of the following:
a first sub-type length value sub-TLV, indicating a transmission delay of the first path;
a second sub-TLV, indicating a packet loss rate of the first path;
a third sub-TLV, indicating a jitter of the first path;
a fourth sub-TLV, indicating a bandwidth of the first path;
a fifth sub-TLV, indicating a path status of the first path;
a sixth sub-TLV, indicating QoE of the first path;
a seventh sub-TLV, indicating a name of the target object; and
an eighth sub-TLV, indicating a domain name of the target object.

57. The apparatus according to any one of claims 46 to 56, wherein the transceiver unit is further configured to:
receive the identification information of the target object, a second path index, and a second path performance metrics that are advertised by a second gateway, wherein the second path index identifies a second path for the second gateway to access the target object, and the second path performance metrics indicates performance of the second path; and
the processing unit is configured to:
select, based on the first path performance metrics and the second path performance metrics, the target path for accessing the target object.

58. The apparatus according to claim 57, wherein the transceiver unit is configured to:
receive a second route advertised by the second gateway, wherein the second route comprises the identification information of the target object, the second path index, and the second path performance metrics.

59. The apparatus according to any one of claims 46 to 58, wherein the transceiver unit is further configured to:
receive the identification information of the target object, a third path index, and a third path performance metrics that are advertised by a second user site egress device, wherein the third path index identifies a third path for the second user site egress device to access the target object through the internet, and the third path performance metrics indicates performance of the third path; and
the processing unit is configured to:
select, based on the first path performance metrics and the third path performance metrics, the target path for accessing the target object.

60. The apparatus according to any one of claims 46 to 59, wherein the first user site egress device accesses the first gateway through an SD-WAN tunnel.

61. The apparatus according to any one of claims 46 to 60, wherein the transceiver unit is further configured to:
receive the identification information of the target object, a fourth path index, and a fourth path performance metrics that are advertised by the first gateway, wherein the fourth path index identifies a fourth path for the first gateway to access the target object, and the fourth path performance metrics indicates performance of the fourth path; and
the processing unit is configured to:
select, based on the first path performance metrics and the fourth path performance metrics, the target path for accessing the target object.

62. The apparatus according to claim 61, wherein the transceiver unit is configured to:
receive a third route advertised by the first gateway, wherein the third route comprises the identification information of the target object, the fourth path index, and the fourth path performance metrics.

63. The apparatus according to any one of claims 46 to 62, wherein the transceiver unit is further configured to:
receive a first service packet for accessing the target object;
the processing unit is further configured to encapsulate a target path index identifying the target path in the first service packet, to obtain a second service packet; and
the transceiver unit is further configured to send the second service packet.

64. The apparatus according to claim 63, wherein the second service packet comprises a generic routing encapsulation GRE header, and the GRE header comprises the target path index.

65. The apparatus according to claim 63, wherein when the target path index is an MPLS label, the second service packet comprises a user datagram protocol UDP header, an MPLS label stack, and a payload, the MPLS label stack comprises the target path index, the payload comprises the first service packet, and the MPLS label stack is located between the UDP header and the payload.

66. The apparatus according to claim 63, wherein when the target path index is an SRv6 SID, the second service packet comprises a generic network virtualization encapsulation GENEVE header, the GENEVE header comprises an SRv6 segment list SID list, and the SRv6 SID list comprises the target path index.

67. The apparatus according to any one of claims 63 to 66, wherein the transceiver unit is configured to:
send the second service packet to the first gateway through a path established between the first user site egress device and the first gateway; or
send the second service packet to the second user site egress device, to forward the second service packet through the second user site egress device.

68. The apparatus according to any one of claims 63 to 66, wherein the transceiver unit is configured to:
receive a third service packet from the second user site egress device, wherein the third service packet comprises the first service packet and the second path index, and the second path index identifies the second path for the second gateway to access the target object; and
the processing unit is configured to:
in response to determining that a path to the second gateway is unreachable, encapsulate the target path index in the first service packet, to obtain the second service packet; or determine the second path index as the target path index, and encapsulate the target path index in the first service packet, to obtain the second service packet.

69. The apparatus according to claim 68, wherein the third service packet comprises an IP header and a payload, the second path index is located between the IP header and the payload, and the payload comprises the first service packet.

70. The apparatus according to any one of claims 46 to 69, wherein the processing unit is further configured to:
store a correspondence between the identification information of the target object, the first path index, and the first path performance metrics.

71. A communication apparatus, used in a first gateway, wherein the apparatus comprises:
a processing unit, configured to obtain a first path performance metrics of a first path for the first gateway to access a target object, wherein the first path performance metrics indicates performance of the first path; and
a transceiver unit, configured to advertise identification information of the target object, a first path index, and the first path performance metrics to a first user site egress device, wherein the first path index identifies the first path.

72. The apparatus according to claim 71, wherein the target object is a software as a service SaaS application or a data center.

73. The apparatus according to claim 71 or 72, wherein the first path index is:
a path number, a multiprotocol label switching MPLS label, or a segment routing over internet protocol version 6 segment identifier SRv6 SID.

74. The apparatus according to claim 73, wherein when the target object is an SaaS application and the first path index is an SRv6 SID, a node function associated with the SRv6 SID is that a node performs SRv6 decapsulation, and sends a packet to a target SaaS application based on an outbound interface corresponding to the SRv6 SID.

75. The apparatus according to any one of claims 71 to 74, wherein the transceiver unit is configured to:
advertise a first route to the first user site egress device, wherein the first route comprises the identification information of the target object, the first path index, and the first path performance metrics.

76. The apparatus according to claim 75, wherein the first route further comprises indication information, the indication information indicates a type of the first path index, and the type is a path number, an MPLS label, or an SRv6 SID.

77. The apparatus according to claim 75 or 76, wherein a route type field of the first route indicates that the first route is a path performance route associated with the target object.

78. The apparatus according to any one of claims 75 to 77, wherein the first route is a route advertised based on a software-defined wide area network SD-WAN address family or an SD-WAN subsequent address family.

79. The apparatus according to any one of claims 71 to 78, wherein the transceiver unit is further configured to:
advertise, to the first user site egress device, a site identifier of a site to which the first gateway belongs, an application type, and a node identifier node ID of the first gateway.

80. The apparatus according to any one of claims 71 to 79, wherein the first path performance metrics comprises one or more of the following:
delay, packet loss rate, jitter, bandwidth, path status, and quality of experience QoE.

81. The apparatus according to any one of claims 75 to 78, wherein the first route comprises one or more of the following:
a first sub-type length value sub-TLV, indicating a transmission delay of the first path;
a second sub-TLV, indicating a packet loss rate of the first path;
a third sub-TLV, indicating a jitter of the first path;
a fourth sub-TLV, indicating a bandwidth of the first path;
a fifth sub-TLV, indicating a path status of the first path;
a sixth sub-TLV, indicating QoE of the first path;
a seventh sub-TLV, indicating a name of the target object; and
an eighth sub-TLV, indicating a domain name of the target object.

82. The apparatus according to any one of claims 71 to 81, wherein the transceiver unit is further configured to:
advertise the identification information of the target object, the first path index, and the first path performance metrics to a second user site egress device.

83. The apparatus according to claim 82, wherein the transceiver unit is configured to:
advertise a second route to the second user site egress device, wherein the second route comprises the identification information of the target object, the first path index, and the first path performance metrics.

84. The apparatus according to any one of claims 71 to 83, wherein the transceiver unit is further configured to:
advertise the identification information of the target object, the first path index, and the first path performance metrics to a second gateway.

85. The apparatus according to any one of claims 71 to 84, wherein the processing unit is further configured to obtain a second path performance metrics of a second path for the first gateway to access the target object, wherein the second path performance metrics indicates performance of the second path; and
the transceiver unit is further configured to advertise the identification information of the target object, a second path index, and the second path performance metrics to the first user site egress device, wherein the second path index identifies the second path.

86. The apparatus according to claim 85, wherein the transceiver unit is configured to:
advertise a third route to the first user site egress device, wherein the third route comprises the identification information of the target object, the second path index, and the second path performance metrics.

87. The apparatus according to claims 71 to 86, wherein the transceiver unit is configured to:
receive an encapsulated first service packet, wherein the first path index is encapsulated in an outer layer of the first service packet; and
forward the first service packet based on the first path index through the first path.

88. The apparatus according to claim 87, wherein the encapsulated first service packet comprises a generic routing encapsulation GRE header, and the GRE header comprises the first path label.

89. The apparatus according to claim 87, wherein when the first path index is an MPLS label, the encapsulated first service packet comprises a UDP header, an MPLS label stack, and a payload, the MPLS label stack comprises the first path index, the payload carries the first service packet, and the MPLS label stack is located between the UDP header and the payload.

90. The apparatus according to claim 87, wherein when the first path index is an SRv6 SID, the encapsulated first service packet comprises a generic network virtualization encapsulation GENEVE header, the GENEVE header comprises a segment list SID list, and the SID list comprises the first path index.

91. A communication apparatus, comprising a processor and a memory, wherein
the memory is configured to store instructions; and
the processor is configured to execute the instructions, so that the communication apparatus performs the method according to any one of claims 1 to 45.

92. A communication system, wherein the system comprises:
a first user site egress device that performs the method according to any one of claims 1 to 25, and a first gateway that performs the method according to any one of claims 26 to 45.

93. A computer-readable storage medium, comprising instructions or a computer program, wherein when the instructions or the computer program is run on a processor, the method according to any one of claims 1 to 45 is implemented.

94. A computer program product, comprising a computer program, wherein when the computer program is run on a processor, the method according to any one of claims 1 to 45 is performed.
